# EUROPEAN PATENT APPLICATION

(11) **EP 4 528 874 A1**
(43) Date of publication of application: **26.03.2025**
(21) Application number: 23917203.4
(22) Date of filing: 23.11.2023
(51) Int. Cl.: H01M 10/0562

(54) **SOLID-STATE ELECTROLYTE, SECONDARY BATTERY, BATTERY MODULE, BATTERY PACK, AND ELECTRICAL DEVICE**

(30) Priority: 17.01.2023 CN 202310077899
(71) Applicant: CONTEMPORARY AMPEREX TECHNOLOGY (HONG KONG) LIMITED, Central (HK)
(72) Inventor: CHEN, Shigang, Ningde, Fujian 352100 (CN); GUO, Bingkun, Ningde, Fujian 352100 (CN); ZHANG, Xinxin, Ningde, Fujian 352100 (CN); LIU, Ben, Ningde, Fujian 352100 (CN); LI, Xiaolong, Ningde, Fujian 352100 (CN); ZHOU, Qicheng, Ningde, Fujian 352100 (CN)
(74) Representative: von Tietzen und Hennig, Nikolaus
(86) International application number: PCT/CN2023/133727
(87) International publication number: WO 2024/152735

(57) **Abstract**

This application provides a solid electrolyte, a secondary battery, a battery module, a battery pack, and an electric apparatus. A contact angle of molten sodium on a surface of the solid electrolyte is less than 82°. This helps to improve the interface wettability between the solid electrolyte and a positive electrode plate/negative electrode plate, reduce the interface resistance, improve the interface kinetic performance, and improve the low-temperature performance of the battery.

## Description

### TECHNICAL FIELD

This application relates to the field of secondary battery technologies, and in particular, to a solid electrolyte, a secondary battery, a battery module, a battery pack, and an electric apparatus.

### BACKGROUND

Sodium batteries have great application potential in large-scale energy storage due to abundant reserves, low costs, and wide operating temperature range.

Currently, sodium batteries often use liquid electrolytes. However, solvents in liquid electrolytes are prone to side reactions with metal negative electrodes, affecting the storage performance and service life of the batteries. Moreover, the dissolution of salts lowers the lowest occupied molecular orbital of solvent molecules, which accelerates the decomposition of the liquid electrolytes and gas evolution, thereby greatly reducing the safety performance of the batteries. In addition, solid electrolytes contain no solvent and can avoid reactions with metal negative electrodes, attracting the attention of researchers. However, solid electrolytes have the issues of interface kinetic performance, thus causing a significant improvement in interface resistance during cycling, reducing the performance of the battery, and failing to meet the application requirements of new-generation electrochemical systems.

### SUMMARY

This application is implemented in view of the foregoing topics and is intended to provide a solid electrolyte. In addition, a contact angle of molten sodium on a surface of the solid electrolyte is less than 82°. This helps to improve the interface wettability between the solid electrolyte and a positive electrode plate/negative electrode plate, reduce the interface resistance, improve the interface kinetic performance, and improve the performance of a battery.

According to a first aspect, this application provides a solid electrolyte for a sodium secondary battery, where a contact angle of molten sodium on a surface of the solid electrolyte is less than 82°.

The contact angle of molten sodium on the surface of the solid electrolyte being less than 82° indicates that the solid electrolyte in this application has better wettability to molten sodium, can improve the interface kinetic performance between the solid electrolyte and the positive electrode plate/negative electrode plate, reduce the interface resistance of the secondary battery, and improve the cycling stability of the sodium secondary battery at room temperature.

In any embodiment, the solid electrolyte includes an inorganic solid electrolyte or a polymer solid electrolyte.

In any embodiment, based on a total mass of the inorganic solid electrolyte, a mass percentage of residual alkali in the inorganic solid electrolyte is not greater than 1000 ppm, optionally not greater than 500 ppm.

The inorganic solid electrolyte is sensitive to air and is likely to react with moisture or carbon dioxide in the air to form residual alkali. The residual alkali in the inorganic solid electrolyte seriously affects the electron transport between the electrolyte and the electrode, reducing the kinetic and electrochemical performance of the battery. A mass percentage of the residual alkali in the inorganic solid electrolyte provided in this application is not greater than 1000 ppm. This helps to reduce the interface resistance of the battery, improve the coulombic efficiency, cycling performance and rate performance of the battery, significantly improve the interface kinetic performance, and improve the performance of the battery. Based on the total mass of the inorganic solid electrolyte, further controlling the percentage of the residual alkali in the inorganic solid electrolyte to be not greater than 500 ppm helps to further reduce the interface resistance and significantly improve the interface kinetic performance.

In any embodiment, the inorganic solid electrolyte is tested using XPS, where a molar percentage of the sodium element existing in a form of residual alkali is not greater than 10% based on a molar amount of all elements detected.

The inorganic solid electrolyte is tested using XPS, and the molar percentage of the sodium element existing in the form of residual alkali is not greater than 10% based on the molar amount of all the elements detected. This helps to reduce the interface resistance of the battery, improve the coulombic efficiency, cycling performance and rate performance of the battery, significantly improve the interface kinetic performance, and improve the performance of the battery.

In any embodiment, the inorganic solid electrolyte material includes one or more of a sulfur-based electrolyte, a sodium superionic conductor, and an oxide electrolyte.

In any embodiment, the sulfur-based electrolyte includes one or more of glassy Na₂S-P₂S₅, Na₁₁Sn₂PnX₁₂, and Na₃Pn_{y}Pn'_{1-y}X_{z}X'_{4-z}, where Pn includes at least one of P and Sb, X includes at least one of S and Se, Pn' includes at least one of Si, Sn, and Ge, X' includes at least one of F, Br, and Cl, 0<y≤1, and 0<z≤4.

The sodium superionic conductor includes Na₃₊ₓM_{y}M'_{2-y}Si_{2-z}P_{z}O₁₂, where M and M' each independently include at least one of Zr, Ca, Mg, Zn, La, Ti, and Nb, 0≤x≤1, 0<y≤2, and 0≤z<2.

The oxide electrolyte includes at least one of Na-β-Al₂O₃ and Na-β"-Al₂O₃, where Na-β-Al₂O₃ includes β-Na₂O·11Al₂O₃, and Na-β"-Al₂O₃ includes β"-Na₂O·5Al₂O₃. Optionally, the oxide electrolyte further includes an inorganic oxide, where the inorganic oxide includes one or more of Li₂O, MgO, TiO₂, ZrO₂, Y₂O₃, MnO₂, SiO₂, and Fe₂O₃, and a mass percentage of the inorganic oxide is 0.5% to 30% based on a total mass of the oxide electrolyte.

Batteries prepared using the foregoing inorganic solid electrolytes all have low interface resistance and excellent coulombic efficiency, cycling stability and rate performance.

In any embodiment, the polymer solid electrolyte is tested using XPS, where a molar percentage of the oxygen element existing in forms of a hydrogen-oxygen bond, a carbon-oxygen double bond, and a carbon-oxygen single bond is not greater than 10% based on a molar amount of all elements detected.

Some functional groups, such as an oxygen-containing functional group, are present on a surface of the polymer electrolyte, and the hydrogen-oxygen bond, carbon-oxygen double bond, and carbon-oxygen single bond in the oxygen-containing functional group affect the interface wettability, enhance obstruction to migration and diffusion of sodium ions, and reduce the kinetic and electrochemical performance of the battery. The polymer solid electrolyte is tested using XPS, and the molar percentage of the oxygen element existing in the forms of a hydrogen-oxygen bond, a carbon-oxygen double bond, and a carbon-oxygen single bond is not greater than 10% based on the molar amount of all the elements detected. This can reduce the surface free energy to improve the interface wettability, and helps to reduce the interface resistance of the battery and improve the cycling performance of the battery at room temperature.

In any embodiment, the polymer solid electrolyte includes a sodium salt and a polymer, optionally including a plasticizer and/or inorganic fillers.

Batteries prepared using the polymer solid electrolyte including a sodium salt and a polymer have low interface resistance and excellent cycling performance. The introduction of the plasticizer and/or inorganic fillers helps to improve the plasticity of the polymer solid electrolyte and improve the mechanical properties of the polymer solid electrolyte.

In any embodiment, the sodium salt includes one or more of sodium chloride, sodium bromide, sodium nitrate, sodium perchlorate, sodium hexafluorophosphate, sodium tetrafluoroborate, sodium tetrafluoroyttrate, sodium hexafluoroarsenate, sodium acetate, sodium trifluoroacetate, sodium tetraphenylborate, sodium trifluoromethanesulfonate, sodium bis(fluorosulfonyl)imide, sodium bis(trifluoromethanesulfonyl)imide, and sodium (n-perfluorobutylsulfonyl)imide, optionally including one or more of sodium hexafluorophosphate and sodium bis(fluorosulfonyl)imide.

The foregoing sodium salts help to reduce the interface resistance of the battery, improve the interface kinetic performance of the battery, and improve the cycling performance of the battery.

In any embodiment, the polymer includes one or more of polyethylene oxide, polyethylene glycol, polyvinylpyrrolidone, polymethyl methacrylate, polyvinylidene fluoride, poly(vinylidene fluoride-copolyhexafluoropropylene), polyvinyl alcohol, polyacrylonitrile, polyvinyl chloride, polyacrylamide, polytrimethylene carbonate, and perfluoropolyether.

All the foregoing polymers can improve the mechanical properties of the polymer solid electrolyte and improve the processibility.

In any embodiment, the polymer solid electrolyte includes a polymer-in-salt electrolyte, where a mass percentage of the sodium salt in the polymer-in-salt electrolyte is greater than 50% and less than 100% based on a total mass of the polymer-in-salt electrolyte.

In the polymer-in-salt electrolyte, the molar percentage of the oxygen element existing in forms of a hydrogen-oxygen bond, a carbon-oxygen double bond, and a carbon-oxygen single bond is lower. This helps to further reduce the interface resistance of the battery, improve the coulombic efficiency, cycling performance at room temperature/low temperature, and rate performance of the battery, improve the interface kinetic performance of the battery, and improve the performance of the battery.

In any embodiment, the polymer solid electrolyte includes a salt-in-polymer electrolyte, where a mass percentage of the sodium salt in the salt-in-polymer electrolyte is 5% to 50% based on a total mass of the salt-in-polymer electrolyte.

In the salt-in-polymer electrolyte, the molar percentage of the oxygen element existing in forms of a hydrogen-oxygen bond, a carbon-oxygen double bond, and a carbon-oxygen single bond is relatively low. This helps to reduce the interface resistance of the battery, improve the coulombic efficiency, cycling performance at room temperature/low temperature, and rate performance of the battery, improve the interface kinetic performance of the battery, and improve the performance of the battery.

In any embodiment, the solid electrolyte is an electrolyte subjected to a surface treatment, where a method for the surface treatment includes one or more of nanosecond laser treatment, magnetron sputtering bias cleaning treatment, and plasma cleaning treatment.

All the above methods for the surface treatment can reduce the contact angle of the solid electrolyte, improve the interface resistance of the battery, and improve the performance of the battery.

In any embodiment, an atmosphere for the nanosecond laser treatment includes an air atmosphere, where a laser wavelength is 250 nm to 3000 nm, optionally 250 nm to 1200 nm; an average laser power is 5 W to 30 W, optionally 10 W to 30 W; a repetition frequency is 5 kHz to 40 kHz; a scanning frequency is 20 mm/s to 150 mm/s; and a pulse duration is 10 ns to 100 ns, optionally 50 ns to 100 ns.

Using nanosecond laser treatment to treat the surface of the solid electrolyte so as to make the contact angle of molten sodium on the surface of the solid electrolyte be less than 82° helps to reduce the interface resistance of the battery, improve the coulombic efficiency, cycling performance at room temperature, and rate performance of the battery, improve the interface kinetic performance of the battery, and improve the performance of the battery.

In any embodiment, an atmosphere for the magnetron sputtering bias cleaning treatment includes a vacuum atmosphere, an argon atmosphere, or an oxygen atmosphere, where a pressure of the vacuum atmosphere is 10⁻⁴ Pa to 1 Pa; a pressure of the argon or oxygen atmosphere is 0.4 Pa to 0.8 Pa; a bias power is 60 W to 100 W; a bias cleaning time is 5 min to 60 min; and a temperature is 20°C to 150°C.

Using magnetron sputtering bias cleaning treatment to treat the surface of the solid electrolyte so as to make the contact angle of molten sodium on the surface of the solid electrolyte be less than 82° helps to reduce the interface resistance of the battery, improve the cycling performance of the battery at room temperature, improve the interface kinetic performance of the battery, and improve the performance of the battery.

In any embodiment, an atmosphere for the plasma cleaning treatment includes an air atmosphere, a vacuum atmosphere, an argon atmosphere, a nitrogen atmosphere, or a helium atmosphere, where a pressure of the vacuum atmosphere is 10⁻⁴ Pa to 1 Pa; a pressure of the argon atmosphere is 0.2 Pa to 1 Pa; a pressure of the nitrogen atmosphere is 0.2 Pa to 1 Pa; a pressure of the helium atmosphere pressure is 0.2 Pa to 1 Pa; a cleaning power of the plasma cleaning treatment is 100 W to 3000 W; a cleaning frequency is 10⁻³ MHz to 3000 MHz; and a cleaning time is 0.1 min to 10 min.

Using plasma cleaning treatment to treat the surface of the solid electrolyte so as to make the contact angle of molten sodium on the surface of the solid electrolyte be less than 82° helps to reduce the interface resistance of the battery, improve the coulombic efficiency, cycling performance at room temperature/low temperature, and rate performance of the battery, improve the interface kinetic performance of the battery, and improve the performance of the battery.

In any embodiment, the solid electrolyte is an oxide electrolyte, and the surface treatment is implemented using the method of nanosecond laser treatment.

For an oxide electrolyte, compared with magnetron sputtering bias cleaning treatment or plasma cleaning treatment, nanosecond laser treatment better helps to reduce the interface resistance of the battery, improve the coulombic efficiency and cycling performance of the battery at room temperature, improve the interface kinetic performance of the battery, and improve the performance of the battery.

According to a second aspect, this application provides a secondary battery including the solid electrolyte according to the first aspect.

In any embodiment, the secondary battery is a sodium metal battery.

In any embodiment, the secondary battery is a sodium secondary battery with no negative electrode.

In any embodiment, the secondary battery includes a positive electrode plate. The positive electrode plate includes a positive electrode active material. The positive electrode active material includes at least one of a layered oxide, a polyanionic compound, and a Prussian blue compound.

In any embodiment, the positive electrode active material includes one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, and NaMnFe(CN)₆.

All the foregoing positive electrode active materials help to reduce the interface resistance of the battery, improve the cycling performance of the battery, improve the interface kinetic performance of the battery, and improve the cycling performance of the battery.

In any embodiment, a coating layer is provided on a surface of the positive electrode active material. The coating layer includes one or more of a carbon material, ZrO₂, TiO₂, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, and aluminum fluoride, where the carbon material includes one or more of amorphous carbon, graphite, and graphene.

The positive electrode active material including the coating layer helps to further improve the coulombic efficiency, cycling performance, and rate performance of the battery.

In any embodiment, a thickness of the coating layer is 2 nm to 1000 nm, optionally 10 nm to 100 nm.

Controlling the thickness of the coating layer to be within an appropriate range helps to improve the coulombic efficiency and cycling performance of the battery.

In any embodiment, the secondary battery includes a negative electrode plate. The negative electrode plate includes a negative electrode current collector and a primer layer disposed on at least one surface of the negative electrode current collector, where the primer layer includes one or more of carbon nanotubes, graphite, graphene, silver and carbon composite nanoparticles, and tin and carbon composite nanoparticles.

The primer layer not only has excellent conductibility but also facilitates uniform deposition of metal ions on the surface of the current collector, thereby improving the coulombic efficiency and cycling performance of the battery.

In any embodiment, an areal density of the primer layer is 5 g/m² to 50 g/m².

The primer layer with an areal density of 5 g/mm² to 50 g/mm² facilitates uniform distribution of nucleation sites and promotes uniform deposition of metal, without affecting electron transport.

In any embodiment, a thickness of the primer layer is 2 µm to 100 µm.

Controlling the thickness of the primer layer to be 2 µm to 100 µm can provide sufficient nucleation sites, facilitating uniform deposition of metal ions, and inhibiting dendrites.

In any embodiment, the interface resistance of the secondary battery is less than 100 Ω.

The secondary battery with the interface resistance less than 100 Ω helps to improve the interface kinetic performance of the solid electrolyte, and improves the performance of the battery.

According to a third aspect, this application provides a battery module including the secondary battery according to the second aspect of this application.

According to a fourth aspect, this application provides a battery pack including the secondary battery according to the second aspect of this application or the battery module according to the third aspect of this application.

According to a fifth aspect, this application provides an electric apparatus including at least one of the secondary battery according to the second aspect of this application, the battery module according to the third aspect of this application, and the battery pack according to the fourth aspect of this application.

### DESCRIPTION OF DRAWINGS

FIG. 1 is a schematic diagram of a secondary battery according to an embodiment of this application;
FIG. 2 is an exploded view of the secondary battery according to the embodiment of this application in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application in FIG. 4; and
FIG. 6 is a schematic diagram of an electric apparatus using a secondary battery as a power source according to an embodiment of this application.

Reference signs in the accompanying drawings:
1. battery pack; 2. upper box body; 3. lower box body; 4. battery module; 5. secondary battery; 51. housing; 52. electrode assembly; and 53. cover plate.

### DESCRIPTION OF EMBODIMENTS

The following specifically discloses embodiments of the solid electrolyte, secondary battery, battery module, battery pack, and electric apparatus of this application with appropriate reference to detailed descriptions of the accompanying drawings. However, there may be cases in which unnecessary detailed descriptions are omitted. For example, there are cases in which detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, it should be understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer of 2, 3, 4, 5, 6, 7, 8, 9, 10, 11, or 12.

Unless otherwise stated, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed sequentially or randomly, preferably, performed sequentially. For example, the method including steps (a) and (b) indicates that the method may include steps (a) and (b) performed sequentially or may include steps (b) and (a) performed sequentially. For example, the foregoing method may further include step (c), indicating that step (c) may be added to the method in any ordinal position, for example, the method may include steps (a), (b), and (c), steps (a), (c), and (b), steps (c), (a), and (b), or the like.

Unless otherwise specified, "include" and "comprise" mentioned in this application are inclusive or may be exclusive. For example, the terms "include" and "comprise" can mean that other unlisted components may also be included or comprised, or only listed components are included or comprised.

Unless otherwise stated, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Typically, solid electrolytes include inorganic solid electrolytes or polymer solid electrolytes. An inorganic solid electrolyte is likely to react with moisture in an air atmosphere to generate residual alkali such as Na₂CO₃, NaHCO₃, or NaOH, affecting the interface kinetic performance of the solid electrolyte. Moreover, some functional groups and dangling bonds are present on the surface of a polymer solid electrolyte, which also significantly affects the interface kinetic performance of the solid electrolyte and hinder migration and diffusion of metal ions. Therefore, it is necessary to develop a new solid electrolyte to meet the application requirements of new-generation electrochemical systems.

### [Solid electrolyte]

In view of this, this application provides a solid electrolyte for a sodium secondary battery, where a contact angle of molten sodium on a surface of the solid electrolyte is less than 82°.

In this specification, the term "sodium secondary battery" refers to a secondary battery that uses sodium ions as current carriers. A negative electrode active material in the sodium secondary battery may be any material, including but not limited to hard carbon, sodium metal, transition metal oxide, transition metal selenide, and alloy. The sodium metal may be sodium metal pre-deposited at the negative electrode plate before the battery is packaged, or may be sodium metal deposited at the negative electrode during cycling of the battery. A secondary battery, in which no negative electrode active material is pre-deposited on the negative electrode plate before the battery is packaged and reversible chemical reactions are implemented based on intercalation and deintercalation/deposition of sodium ions at the positive and negative electrodes, is called a sodium battery with no negative electrode and is also a type of sodium secondary batteries.

Herein, "contact angle" refers to an included angle formed at a junction of a solid phase, a liquid phase and a gas phase, from a solid-liquid interface to a gas-liquid interface through the inside of the liquid. The contact angle is an important parameter for measuring the wettability of the liquid to the surface of the material. A smaller contact angle indicates that it is easier for the liquid to wet the solid, and a larger contact angle indicates that it is difficult for the liquid to wet the solid and the liquid is likely to move on the surface.

Herein, the contact angle of molten sodium on the surface of the solid electrolyte can be tested using a method known in the art, for example, by dropwise adding the molten sodium onto the surface of the solid electrolyte and then using a high-resolution camera (Grasshopper GRAS-50S5M-C) equipped with a Fujinon HF75SA-1 lens to take a photograph of the surface of the electrolyte, and measuring the contact angle using ImageJ software.

In the prior art, the solid electrolyte is not easily wetted by molten sodium, where the contact angle is about 90° or is even an obtuse angle. This application provides a solid electrolyte, where a contact angle of molten sodium on a surface of the solid electrolyte being less than 82° indicates that the solid electrolyte in this application has better surface wettability, can improve the interface kinetic performance between the solid electrolyte and a positive electrode plate/negative electrode plate, reduce the interface resistance of a secondary battery, and improve the cycling stability of a sodium secondary battery at room temperature.

In some embodiments, the solid electrolyte includes an inorganic solid electrolyte or a polymer solid electrolyte.

In some embodiments, based on a total mass of the inorganic solid electrolyte, a mass percentage of residual alkali in the inorganic solid electrolyte is not greater than 1000 ppm, optionally not greater than 500 ppm.

In some embodiments, based on the total mass of the inorganic solid electrolyte, the mass percentage of the residual alkali in the inorganic solid electrolyte is optionally 10 ppm, 100 ppm, 200 ppm, 300 ppm, 400 ppm, 500 ppm, 600 ppm, 700 ppm, 800 ppm, 900 ppm, or 1000 ppm.

In some embodiments, the residual alkali in the inorganic solid electrolyte includes one or more of NaOH, Na₂CO₃, and NaHCO₃.

Herein, the percentage of the residual alkali in the inorganic solid electrolyte may be tested using a method known in the art. A chemical reagent potentiometric titration method was used for the test, for example, the test may be performed with reference to the standard GB/T 9725-2007. Specifically, a Metrohm 905 Titrando potentiometric titrator may be used; the solid electrolyte is soaked in ethylene glycol dimethyl ether; an ethylene glycol dimethyl ether solution with the solid electrolyte is titrated with a standard titration solution; a potential or pH value of the ethylene glycol dimethyl ether solution is recorded after 0.1 ml standard titration solution is dropwise added each time; and titration is stopped when there is little change in the potential or pH value. A volume of the standard titration solution that is dropwise added and the measured potential or pH value are recorded, and a titration endpoint is determined using a graphing method or a two-stage derivative method, to determine a titration volume of the standard titration solution. A mass of NaHCO₃, NaOH, and Na₂CO₃ obtained by calculation is divided by a mass of the solid electrolyte, to obtain a mass percentage as an amount of residual alkali in the solid electrolyte.

It can be understood that the inorganic solid electrolyte is sensitive to air and is likely to react with moisture or carbon dioxide in the air to form residual alkali. The residual alkali in the inorganic solid electrolyte seriously affects the electron transport between the electrolyte and the electrode, reducing the kinetic and electrochemical performance of the battery. Based on the total mass of the inorganic solid electrolyte, controlling the mass percentage of the residual alkali in the inorganic solid electrolyte to be not greater than 1000 ppm helps to reduce the interface resistance of the battery, improve the coulombic efficiency, cycling performance and rate performance of the battery, significantly improve the interface kinetic performance, and improve the performance of the battery. Based on the total mass of the inorganic solid electrolyte, further controlling the percentage of the residual alkali in the inorganic solid electrolyte to be not greater than 500 ppm helps to further reduce the interface resistance and significantly improve the interface kinetic performance.

In some embodiments, the inorganic solid electrolyte is tested using X-ray photoelectron spectroscopy (XPS) analysis, where a molar percentage of the sodium element existing in a form of residual alkali is not greater than 10% based on a molar amount of all elements detected.

In some embodiments, the inorganic solid electrolyte is tested using XPS, where the molar percentage of the sodium element existing in the form of residual alkali is optionally 0.1%, 1%, 1.5%, 2%, 3%, 4%, 4.5%, 5%, 5.5%, 6%, 7%, 8%, 9%, 9.5%, or 10% based on the molar amount of all elements detected.

In some embodiments, the residual alkali in the inorganic solid electrolyte includes one or more of NaOH, Na₂CO₃, and NaHCO₃.

X-ray photoelectron spectroscopy analysis refers to a surface analysis technology, in which a sample surface detection depth is not greater than 10 nm. Therefore, XPS can be used for analyzing the percentage of the residual alkali on the surface of the inorganic solid electrolyte.

Herein, the molar percentage of the sodium element existing in the form of residual alkali in the inorganic solid electrolyte mat be tested using a method known in the art. For example, a Shimadzu Axis Supra+ photoelectron spectrometer is used to test elements and their percentages within 10 nm of the surface of the inorganic solid electrolyte (oxide & NASICON). XPS full spectrum analysis may be performed first to obtain a molar percentage of the sodium element, and then partial spectrum analysis is performed, to determine the molar percentage of the sodium element existing in the form of residual alkali based on a total amount of the sodium element. Ultimately, the molar percentage of the sodium element existing in the form of residual alkali based on the total amount of the sodium element is multiplied by the molar percentage of the sodium element to obtain a percentage of a molar amount of the sodium element existing in the form of residual alkali in a molar amount of all the elements detected using XPS.

The inorganic solid electrolyte is tested using XPS, and the molar percentage of the sodium element existing in the form of residual alkali is not greater than 10% based on the molar amount of all the elements detected. This helps to reduce the interface resistance of the battery, improve the coulombic efficiency, cycling performance and rate performance of the battery, significantly improve the interface kinetic performance, and improve the performance of the battery.

In some embodiments, the inorganic solid electrolyte material includes one or more of a sulfur-based electrolyte, a sodium superionic conductor, and an oxide electrolyte.

In some embodiments, the sulfur-based electrolyte includes one or more of glassy Na₂S-P₂S₅, Na₁₁Sn₂PnX₁₂, and Na₃Pn_{y}Pn'_{1-y}X_{z}X'_{4-z}, where Pn includes at least one of P and Sb, X includes at least one of S and Se, Pn' includes at least one of Si, Sn, and Ge, X' includes at least one of F, Br, and Cl, 0<y≤1, and 0<z≤4.

In some embodiments, y is optionally 0.1, 0.2, 0.3, 0.4, 0.5, 0.6, 0.7, 0.8, 0.9, or 1.

In some embodiments, z is optionally 0.1, 0.2, 0.3, 0.4, 0.5, 0.6, 0.7, 0.8, 0.9, 1, 1.2, 1.4, 1.5, 1.6, 1.8, 2, 2.2, 2.4, 2.5, 2.6, 2.8, 3, 3.2, 3.4, 3.5, 3.6, 3.8, or 4.

In some embodiments, the sulfur-based electrolyte includes Na₁₁Sn₂PS₁₂, Na₁₀SnP₂S₁₂, Na₁₀GeP₂S₁₂, and Na_{2.9375}PS_{3.9375}Cl_{0.0625}.

The sodium superionic conductor includes Na₃₊ₓM_{y}M'_{2-y}Si_{2-z}P_{z}O₁₂, where M and M' each independently include at least one of Zr, Ca, Mg, Zn, La, Ti, and Nb, 0≤x≤1, 0<y≤2, and 0≤z<2.

In some embodiments, x is optionally 0, 0.1, 0.2, 0.3, 0.4, 0.5, 0.6, 0.7, 0.8, 0.9, or 1.

In some embodiments, y is optionally 0.1, 0.2, 0.3, 0.4, 0.5, 0.6, 0.7, 0.8, 0.9, 1, 1.1, 1.2, 1.3, 1.4, 1.5, 1.6, 1.7, 1.8, or 1.9.

In some embodiments, z is optionally 0, 0.1, 0.2, 0.3, 0.4, 0.5, 0.6, 0.7, 0.8, 0.9, 1, 1.1, 1.2, 1.3, 1.4, 1.5, 1.6, 1.7, 1.8, or 1.9.

In some embodiments, the sodium superionic conductor solid electrolyte includes at least one of Na_{3.4}Zr_{1.9}Zn_{0.1}Si_{2.2}P_{0.8}O₁₂, Na₃Zr_{1.75}Mg_{0.25}Si₂PO₁₂, Na_{3.3}Zr_{1.7}La_{0.3}Si₂PO₁₂, and Na_{3.1}Ca_{0.05}Zr_{1.95}Si₂PO₁₂.

The oxide electrolyte includes at least one of Na-β-Al₂O₃ and Na-β"-Al₂O₃, where Na-β-Al₂O₃ includes β-Na₂O·11Al₂O₃, and Na-β"-Al₂O₃ includes β"-Na₂O·5Al₂O₃. Optionally, the oxide electrolyte further includes an inorganic oxide, where the inorganic oxide includes at least one of Li₂O, MgO, TiO₂, ZrO₂, Y₂O₃, MnO₂, SiO₂, and Fe₂O₃, and a mass percentage of the inorganic oxide is 0.5% to 30% based on a total mass of the oxide electrolyte.

In some embodiments, the mass percentage of the inorganic oxide is optionally 0.5%, 1%, 5%, 7%, 10%, 12%, 15%, 18%, 20%, 23%, 25%, 28%, or 30% based on the total mass of the oxide electrolyte.

Batteries prepared using the foregoing inorganic solid electrolytes all have low interface resistance and excellent coulombic efficiency, cycling stability and rate performance.

In some embodiments, the polymer solid electrolyte is tested using XPS, where a molar percentage of the oxygen element existing in forms of a hydrogen-oxygen bond (O-H), a carbon-oxygen double bond (C=O), and a carbon-oxygen single bond (C-O) is not greater than 10% based on a molar amount of all elements detected.

Herein, the carbon-oxygen double bond includes any form such as a carbonyl group or an ester group.

In some embodiments, the polymer solid electrolyte is tested using XPS, where the molar percentage of the oxygen element existing in the forms of a hydrogen-oxygen bond, a carbon-oxygen double bond, and a carbon-oxygen single bond is optionally 0.1%, 1%, 1.5%, 2%, 3%, 4%, 4.5%, 5%, 5.5%, 6%, 7%, 8%, 9%, 9.5%, or 10% based on the molar amount of all elements detected.

Herein, the molar percentage of the oxygen element existing in forms of a hydrogen-oxygen bond, a carbon-oxygen double bond, and a carbon-oxygen single bond in the polymer solid electrolyte may be tested using a method known in the art. For example, a Shimadzu Axis Supra+ photoelectron spectrometer is used to test elements and their percentages within a thickness of 10 nm of the surface of the polymer solid electrolyte. XPS full spectrum analysis may be performed first to obtain the molar percentage of the oxygen element, and then partial spectrum analysis may be performed, to determine the molar percentage of the oxygen element existing in the forms of a hydrogen-oxygen bond, a carbon-oxygen double bond, and a carbon-oxygen single bond. Ultimately, the percentage of the molar amount of the oxygen element existing in the forms of a hydrogen-oxygen bond, a carbon-oxygen double bond, and a carbon-oxygen single bond in the molar amount of the oxygen element is multiplied by the molar percentage of the oxygen element to obtain a percentage of a molar amount of the oxygen element existing in the forms of a hydrogen-oxygen bond, a carbon-oxygen double bond, and a carbon-oxygen single bond in a molar amount of all the elements detected using XPS.

Some functional groups, such as an oxygen-containing functional group, are present on the surface of the polymer electrolyte, and the hydrogen-oxygen bond, carbon-oxygen double bond, and carbon-oxygen single bond in the oxygen-containing functional group affect the interface wettability, enhance obstruction to migration and diffusion of sodium ions, and reduce the kinetic and electrochemical performance of the battery. The polymer solid electrolyte is tested using XPS, and the molar percentage of the oxygen element existing in the forms of a hydrogen-oxygen bond, a carbon-oxygen double bond, and a carbon-oxygen single bond is not greater than 10% based on the molar amount of all the elements detected. This can reduce the surface free energy to improve the interface wettability, and helps to reduce the interface resistance of the battery and improve the cycling performance of the battery at room temperature.

In some embodiments, the polymer solid electrolyte includes a sodium salt and a polymer, optionally including a plasticizer and/or inorganic fillers.

In some embodiments, the plasticizer includes one or more of di-2-ethylhexyl phthalate (DEHP), diisononyl phthalate (DINP), dibutyl phthalate (DBP), and dioctyl sebacate (DOS).

In some embodiments, the inorganic fillers include one or more of TiO₂, SiO₂, Al₂O₃, graphene oxide (GO), a sulfur-based electrolyte, a sodium superionic conductor, and an oxide electrolyte.

In some embodiments, a mass percentage of the plasticizer is 1% to 10% based on a total mass of the polymer solid electrolyte. In some embodiments, the mass percentage of the plasticizer is optionally 1%, 2%, 3%, 4%, 5%, 6%, 7%, 8%, 9%, or 10% based on the total mass of the polymer solid electrolyte.

In some embodiments, a mass percentage of the inorganic fillers is 1% to 10% based on the total mass of the polymer solid electrolyte. In some embodiments, the mass percentage of the inorganic fillers is optionally 1%, 2%, 3%, 4%, 5%, 6%, 7%, 8%, 9%, or 10% based on the total mass of the polymer solid electrolyte.

In some embodiments, the polymer solid electrolyte includes a sodium salt and a polymer. In some embodiments, the polymer solid electrolyte includes a sodium salt, a polymer, and a plasticizer. In some embodiments, the polymer solid electrolyte includes a sodium salt, a polymer, and inorganic fillers.

Batteries prepared using the polymer solid electrolyte including a sodium salt and a polymer have low interface resistance and excellent cycling performance. The introduction of the plasticizer and/or inorganic fillers helps to improve the plasticity of the polymer solid electrolyte and improve the mechanical properties of the polymer solid electrolyte.

In some embodiments, the sodium salt includes one or more of sodium chloride (NaCl), sodium bromide (NaBr), sodium nitrate (NaNO₃), sodium perchlorate (NaClO₄), sodium hexafluorophosphate (NaPF₆), sodium tetrafluoroborate (NaBF₄), sodium tetrafluoroyttrate (NaYF₆), sodium hexafluoroarsenate (NaAsF₆), sodium acetate (CH₃COONa), sodium trifluoroacetate (CF₃COONa), sodium tetraphenylborate (NaB(C₆H₅)₄), sodium trifluoromethanesulfonate (NaOTf), sodium bis(fluorosulfonyl)imide (NaFSI), sodium bis(trifluoromethanesulfonyl)imide (NaTFSI), and sodium (n-perfluorobutylsulfonyl)imide (NaFNFSI), optionally including one or more of sodium hexafluorophosphate (NaPF₆) and sodium bis(fluorosulfonyl)imide (NaFSI).

Solid electrolytes including the foregoing sodium salts all have excellent sodium ion transport rate and help to improve the conductibility of the battery.

In some embodiments, the polymer includes one or more of polyethylene oxide (PEO), polyethylene glycol (PEG), polyvinylpyrrolidone (PVP), polymethyl methacrylate (PMMA), polyvinylidene fluoride (PVDF), poly(vinylidene fluoride-copolyhexafluoropropylene) (PVDF-HFP), polyvinyl alcohol (PVA), polyacrylonitrile (PAN), polyvinyl chloride (PVC), polyacrylamide (PMA), polytrimethylene carbonate (PTMC), and perfluoropolyether (PFPE).

In some embodiments, the polymer includes polyethylene oxide. In some embodiments, the polymer includes polyvinylidene fluoride. In some embodiments, the polymer includes polyvinylidene fluoride. In some embodiments, the polymer includes poly(vinylidene fluoride-copolyhexafluoropropylene). In some embodiments, the polymer includes polyethylene oxide and perfluoropolyether.

All the foregoing polymers can improve the mechanical properties of the polymer solid electrolyte and improve the processibility.

In some embodiments, the polymer solid electrolyte includes a polymer-in-salt electrolyte, where a mass percentage of the sodium salt in the polymer-in-salt electrolyte is greater than 50% and less than 100% based on a total mass of the polymer-in-salt electrolyte.

In some embodiments, the polymer solid electrolyte includes a polymer-in-salt electrolyte, where a mass percentage of the sodium salt in the polymer-in-salt electrolyte is greater than 50% and less than 80% based on a total mass of the polymer-in-salt electrolyte.

In some embodiments, the mass percentage of the sodium salt in the polymer-in-salt electrolyte is optionally 51%, 55%, 60%, 65%, 70%, or 75% based on the total mass of the polymer-in-salt electrolyte.

On the surface of the polymer-in-salt electrolyte, the molar percentage of the oxygen element existing in forms of O-H, C=O, and C-O is lower. This helps to further reduce the interface resistance of the battery, improve the coulombic efficiency, cycling performance at room temperature/low temperature, and rate performance of the battery, improve the interface kinetic performance of the battery, and improve the performance of the battery.

In some embodiments, the polymer solid electrolyte includes a salt-in-polymer electrolyte, where a mass percentage of the sodium salt in the salt-in-polymer electrolyte is 5% to 50% based on a total mass of the salt-in-polymer electrolyte.

In some embodiments, the mass percentage of the sodium salt in the salt-in-polymer electrolyte is optionally 5%, 10%, 15%, 20%, 25%, 30%, 35%, 40%, 45%, or 50% based on the total mass of the salt-in-polymer electrolyte.

On the surface of the salt-in-polymer electrolyte, the molar percentage of the oxygen element existing in forms of a hydrogen-oxygen bond, a carbon-oxygen double bond, and a carbon-oxygen single bond is relatively low. This helps to reduce the interface resistance of the battery, improve the coulombic efficiency, cycling performance at room temperature/low temperature, and rate performance of the battery, improve the interface kinetic performance of the battery, and improve the performance of the battery.

In some embodiments, the solid electrolyte is an electrolyte subjected to a surface treatment, where a method for the surface treatment includes one or more of nanosecond laser treatment, magnetron sputtering bias cleaning treatment, and plasma cleaning treatment.

In some embodiments, the method for the surface treatment includes nanosecond laser treatment. In some embodiments, the method for the surface treatment includes magnetron sputtering bias cleaning treatment. In some embodiments, the method for the surface treatment includes plasma cleaning treatment.

All the above methods for the surface treatment can be used to remove the residual alkali on the surface of the inorganic solid electrolyte or selectively remove oxygen-containing groups such as a hydrogen-oxygen bond, a carbon-oxygen double bond, and a carbon-oxygen single bond on the surface of the polymer solid electrolyte, helping to improve the interface wettability, reduce the contact angle of the solid electrolyte, improve the interface resistance of the battery, and improve the performance of the battery.

In some embodiments, an atmosphere for the nanosecond laser treatment includes an air atmosphere, where a laser wavelength is 250 nm to 3000 nm, optionally 250 nm to 1200 nm; an average laser power is 5 W to 30 W, optionally 10 W to 30 W; a repetition frequency is 5 kHz to 40 kHz; a scanning frequency is 20 mm/s to 150 mm/s; and a pulse duration is 10 ns to 100 ns, optionally 50 ns to 100 ns.

In some embodiments, the laser wavelength is optionally 266 nm, 355 nm, 532 nm, 633 nm, 785 nm, 1064 nm, or 2940 nm; the average laser power is optionally 5 W, 8 W, 10 W, 13 W, 17 W, 10 W, 20 W, 22 W, 25 W, 28 W, or 30 W; the repetition frequency is optionally 5 kHz, 10 kHz, 15 kHz, 20 kHz, 25 kHz, 30 kHz, 35 kHz, or 40 kHz; the scanning frequency is optionally 20 mm/s, 40 mm/s, 50 mm/s, 60 mm/s, 80 mm/s, 100 mm/s, 120 mm/s, 140 mm/s, or 150 mm/s; and the pulse duration is optionally 10 ns, 20 ns, 30 ns, 40 ns, 50 ns, 60 ns, 70 ns, 80 ns, 90 ns, or 100 ns.

Using nanosecond laser treatment to treat the surface of the solid electrolyte so as to make the contact angle of molten sodium on the surface of the solid electrolyte be less than 82° helps to reduce the interface resistance of the battery, improve the coulombic efficiency, cycling performance at room temperature, and rate performance of the battery, improve the interface kinetic performance of the battery, and improve the performance of the battery.

In some embodiments, an atmosphere for the magnetron sputtering bias cleaning treatment includes a vacuum atmosphere, an argon atmosphere, or an oxygen atmosphere, where a pressure of the vacuum atmosphere is 10⁻⁴ Pa to 1 Pa; a pressure of the argon or oxygen atmosphere is 0.4 Pa to 0.8 Pa; a bias power is 60 W to 100 W; a bias cleaning time is 5 min to 60 min; and a temperature is 20°C to 150°C.

In some embodiments, the pressure of the vacuum atmosphere is optionally 10⁻⁴ Pa, 5×10⁻³ Pa, 10⁻³ Pa, 5×10⁻² Pa, 10⁻² Pa, 0.1 Pa, 0.2 Pa, 0.5 Pa, 0.8 Pa, or 1 Pa; the pressure of the argon or oxygen atmosphere is optionally 0.4 Pa, 0.45 Pa, 0.5 Pa, 0.55 Pa, 0.6 Pa, 0.65 Pa, 0.7 Pa, 0.75 Pa, or 0.8 Pa; the bias power is optionally 60 W, 65 W, 70 W, 75 W, 80 W, 85 W, 90 W, 95 W, or 100 W; the bias cleaning time is optionally 5 min, 10 min, 15 min, 20 min, 25 min, 30 min, 35 min, 40 min, 45 min, 50 min, 55 min, or 60 min; and the temperature is optionally 20 °C, 40 °C, 50 °C, 60 °C, 80 °C, 100 °C, 120 °C, 140 °C, or 150 °C.

Using magnetron sputtering bias cleaning treatment to treat the surface of the solid electrolyte so as to make the contact angle of molten sodium on the surface of the solid electrolyte be less than 82° helps to reduce the interface resistance of the battery, improve the cycling performance of the battery at room temperature, improve the interface kinetic performance of the battery, and improve the performance of the battery.

In some embodiments, an atmosphere for the plasma cleaning treatment includes an air atmosphere, a vacuum atmosphere, an argon atmosphere, a nitrogen atmosphere, or a helium atmosphere, where a pressure of the vacuum atmosphere is 10⁻⁴ Pa to 1 Pa; a pressure of the argon atmosphere is 0.2 Pa to 1 Pa; a pressure of the nitrogen atmosphere is 0.2 Pa to 1 Pa; a pressure of the helium atmosphere pressure is 0.2 Pa to 1 Pa; a cleaning power of the plasma cleaning treatment is 100 W to 3000 W; a cleaning frequency is 10⁻³ MHz to 3000 MHz; and a cleaning time is 0.1 min to 10 min.

In some embodiments, the pressure of the vacuum atmosphere is optionally 10⁻⁴ Pa, 5×10⁻³ Pa, 10⁻³ Pa, 5×10⁻² Pa, 10⁻² Pa, 0.1 Pa, 0.2 Pa, 0.5 Pa, 0.8 Pa, or 1 Pa; the pressure of the argon atmosphere is optionally 0.2 Pa, 0.4 Pa, 0.45 Pa, 0.5 Pa, 0.55 Pa, 0.6 Pa, 0.65 Pa, 0.7 Pa, 0.75 Pa, 0.8 Pa, 0.9 Pa, or 1 Pa; the pressure of the nitrogen atmosphere is optionally 0.2 Pa, 0.4 Pa, 0.45 Pa, 0.5 Pa, 0.55 Pa, 0.6 Pa, 0.65 Pa, 0.7 Pa, 0.75 Pa, 0.8 Pa, 0.9 Pa, or 1 Pa; the pressure of the helium atmosphere pressure is optionally 0.2 Pa, 0.4 Pa, 0.45 Pa, 0.5 Pa, 0.55 Pa, 0.6 Pa, 0.65 Pa, 0.7 Pa, 0.75 Pa, 0.8 Pa, 0.9 Pa, or 1 Pa; the cleaning power of the plasma cleaning treatment is optionally 100 W, 500 W, 1000 W, 1300 W, 1500 W, 1700 W, 2000 W, 2200 W, 2500 W, 2800 W, or 3000 W; the cleaning frequency is optionally 4×10⁻² MHz, 13.56 MHz, or 2.45×10³ MHz; and the cleaning time is optionally 0.1 min, 0.5 min, 1 min, 2 min, 3 min, 4 min, 5 min, 6 min, 7 min, 8 min, 9 min, or 10 min.

Using plasma cleaning treatment to treat the surface of the solid electrolyte so as to make the contact angle of molten sodium on the surface of the solid electrolyte be less than 82° helps to reduce the interface resistance of the battery, improve the coulombic efficiency, cycling performance at room temperature/low temperature, and rate performance of the battery, improve the interface kinetic performance of the battery, and improve the performance of the battery.

The applicant has accidentally found that an excessively large treatment power or an excessively long time can further reduce a percentage of a surface functional group and improve the interface kinetic performance, but also cause some damage to a bulk material, which is detrimental to further improvement of the cycling performance.

In some embodiments, the solid electrolyte is an oxide electrolyte, and the surface treatment is implemented using the method of nanosecond laser treatment.

For an oxide electrolyte, compared with magnetron sputtering bias cleaning treatment or plasma cleaning treatment, nanosecond laser treatment better helps to reduce the surface free energy of the oxide electrolyte, further reduce the interface resistance of the battery, improve the coulombic efficiency and cycling performance of the battery at room temperature, improve the interface kinetic performance of the battery, and improve the performance of the battery.

### [Positive electrode plate]

In some embodiments, the positive electrode plate includes a positive electrode active material. The positive electrode active material includes at least one of a layered transition metal oxide, a polyanionic compound, and a Prussian blue compound.

In some embodiments, a transition metal in the layered transition metal oxide may be at least one of Mn, Fe, Ni, Co, Cr, Cu, Ti, Zn, V, Zr, and Ce. Optionally, the layered transition metal oxide is, for example, NaₓMO₂, where M is one or more of Ti, V, Mn, Co, Ni, Fe, Cr, and Cu, and 0<x≤1.

In some embodiments, the polyanionic compound may be a type of compound including metal ions, transition metal ions, and a tetrahedral (YO₄)ₙ₋ anion unit. The metal ions are optionally one of sodium ions, lithium ions, potassium ions, and zinc ions; the transition metal is optionally at least one of Mn, Fe, Ni, Co, Cr, Cu, Ti, Zn, V, Zr, and Ce; Y is optionally at least one of P, S, and Si; and n represents a valence state of (YO₄)ⁿ⁻.

In some embodiments, the Prussian blue compound may be a type of compound including sodium ions, transition metal ions, and cyanide ions (CN⁻). The transition metal may be at least one of Mn, Fe, Ni, Co, Cr, Cu, Ti, Zn, V, Zr, and Ce. The Prussian blue compound is, for example, NaₐMe_{d}Me'_{c}(CN)₆, where Me and Me' are each independently at least one of Ni, Cu, Fe, Mn, Co, and Zn; 0<a≤2; 0<b<1; and 0<c<1.

In some embodiments, the positive electrode active material includes one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, and NaMnFe(CN)₆.

All the above positive electrode active materials help to widen an electrochemical window of the battery, improve the storage performance of the battery, reduce gas generation rate of the battery, and improve the safety of the battery.

In some embodiments, a coating layer is provided on a surface of the positive electrode active material, where the coating layer includes one or more of a carbon material, ZrO₂, TiO₂, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, and aluminum fluoride, where the carbon material includes one or more of amorphous carbon, graphite, and graphene.

Herein, the term "amorphous carbon" refers to a carbon material with a quite low graphitization and crystallization degree and similar to an amorphous form, and such carbon material has no specific shape and no periodic structure. In an example, the amorphous carbon includes but is not limited to carbon black, charcoal, or coke.

Herein, the term "graphite" refers to an allotrope of carbon, including natural graphite and artificial graphite.

Herein, the term "graphene" refers to a carbon material in which carbon atoms connected through sp² hybridization are tightly stacked to form a single-layer two-dimensional honeycomb lattice structure. In an example, the graphene includes but is not limited to single-layer graphene or multi-layer graphene.

Herein, the term "single-layer graphene" refers to a single-layer sheet structure formed by carbon atoms periodically and densely arranged in a hexagonal honeycomb structure. In an example, a thickness of the single-layer graphene is only 0.3 nm to 0.4 nm.

Herein, the term "multi-layer graphene" is prepared by stacking 2 to 10 layers of single-layer graphene, with a total thickness of less than 100 nm.

The positive electrode active material including the coating layer helps to improve the cycling performance and storage performance of the battery.

In some embodiments, a thickness of the coating layer is 2 nm to 1000 nm, optionally 10 nm to 100 nm.

In some embodiments, the thickness of the coating layer is optionally 2 nm, 5 nm, 10 nm, 20 nm, 30 nm, 40 nm, 50 nm, 60 nm, 70 nm, 80 nm, 90 nm, 100 nm, 200 nm, 300 nm, 400 nm, 500 nm, 600 nm, 700 nm, 800 nm, 900 nm, or 1000 nm.

Controlling the thickness of the coating layer within an appropriate range helps to improve the high-voltage cyclic stability and electrical properties of the battery.

The positive electrode plate may further include a conductive agent to improve the conductibility of the positive electrode. The conductive agent is optionally one or more of Super P, acetylene black, carbon black, Ketjen black, carbon dots, carbon nanotubes, graphite, graphene, and carbon nanofiber.

The positive electrode plate may further include a binder to firmly bond the positive electrode active material and optional conductive agent to a positive electrode current collector. The binder is optionally at least one of polyvinylidene fluoride (PVDF), polytetrafluoroethylene (PTFE), polyacrylic acid (PAA), polyvinyl alcohol (PVA), ethylene vinyl acetate (EVA) copolymer, styrene-butadiene rubber (SBR), carboxymethyl cellulose (CMC), sodium alginate (SA), polymethacrylic acid (PMA), and carboxymethyl chitosan (CMCS).

The positive electrode plate further includes a positive electrode current collector, and the positive electrode current collector may be a conductive carbon sheet, a metal foil, a carbon-coated metal foil, a porous metal plate, or a composite current collector. A conductive carbon material of the conductive carbon sheet is optionally one or more of Super P, carbon black, Ketjen black, carbon dots, carbon nanotubes, graphite, graphene and carbon nanofiber. Metal materials of the metal foil, carbon-coated metal foil and porous metal plate are each independently at least one selected from copper, aluminum, nickel, and stainless steel. The composite current collector may be a composite current collector formed by compositing a metal foil and a polymer base film.

In some embodiments, the positive electrode plate may be prepared in the following manner: the above components for preparing the positive electrode plate, for example, the positive electrode active material, the conductive agent, the binder, and any other component, are dispersed in a solvent (for example, N-methylpyrrolidone) to form a positive electrode slurry; and the positive electrode slurry is applied onto the positive electrode current collector, followed by processes such as drying and cold pressing to obtain a positive electrode plate.

### [Negative electrode plate]

In some embodiments, the negative electrode plate includes a negative electrode current collector and a primer layer disposed on at least one surface of the negative electrode current collector, where the primer layer includes one or more of carbon nanotubes, graphite, graphene, silver and carbon composite nanoparticles, and tin and carbon composite nanoparticles.

The primer layer not only has excellent conductibility but also facilitates uniform deposition of metal ions on the surface of the current collector, thereby improving the cycling performance and safety of the battery.

In some embodiments, the negative electrode plate may include only a negative electrode current collector with a primer layer and include no negative electrode active material. The negative electrode plate may alternatively have a metal phase pre-deposited on the negative electrode current collector with a primer layer.

In some embodiments, the negative electrode current collector may be a metal foil or a composite current collector. For example, an aluminum foil or copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, and the like) on the polymer material matrix (for example, matrices of polypropylene (PP), polyethylene terephthalate (PET), polybutylene terephthalate (PBT), polystyrene (PS), and polyethylene (PE)).

In some embodiments, an areal density of the primer layer is 5 g/m² to 50 g/m².

In some embodiments, the areal density of the primer layer is optionally 5 g/m², 10 g/m², 15 g/m², 20 g/m², 25 g/m², 30 g/m², 35 g/m², 40 g/m², 45 g/m², or 50 g/m².

The primer layer with an areal density of 5 g/mm² to 50 g/mm² facilitates uniform distribution of nucleation sites and promotes uniform deposition of metal in a battery with no negative electrode, without affecting electron transport.

In some embodiments, a thickness of the primer layer is 2 µm to 100 µm.

In some embodiments, the thickness of the primer layer is optionally 2 µm, 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, or 100 µm.

Controlling the thickness of the primer layer to be 2 µm to 100 µm can provide sufficient nucleation sites, facilitating uniform deposition of metal ions, and inhibiting dendrites.

### [Secondary battery]

The secondary battery includes the solid electrolyte in some embodiments.

In some embodiments, the secondary battery further includes a positive electrode plate, a negative electrode plate, and a separator.

In some embodiments, the secondary battery is a sodium metal battery.

In the sodium metal battery, sodium metal is first deposited on the negative electrode current collector to form a sodium metal phase as the negative electrode active material; and during charging and discharging, sodium ions gain electrons on an anode side such that the sodium metal is deposited on the surface of the current collector to form the sodium metal phase, and the sodium metal can also be converted into sodium ions and return to the positive electrode, realizing cyclic charging and discharging. As compared with a conventional sodium-ion battery, a larger capacity of the sodium metal can significantly increase the energy density of the sodium metal battery.

In some embodiments, the secondary battery is a sodium secondary battery with no negative electrode.

The sodium secondary battery with no negative electrode does not include a negative electrode active material and includes only a negative electrode current collector. During initial charging, sodium ions gain electrons on the anode side such that the sodium metal is deposited on a surface of the current collector to form a sodium metal phase. During discharging, the sodium metal can be converted into sodium ions and return to the positive electrode, realizing cyclic charging and discharging. Compared with other sodium secondary batteries, the sodium secondary battery with no negative electrode can achieve a higher energy density as it is not limited by the negative electrode material. In addition, the sodium secondary battery with no negative electrode maintains high electrochemical performance, as well as greatly reduces the preparation processes, increases the production period, and reduces the costs of the battery.

In some embodiments, a CB value of the sodium battery with no negative electrode is less than or equal to 0.1.

The CB value is obtained by dividing a unit area capacity of the negative electrode plate in the secondary battery by a unit area capacity of the positive electrode plate. The battery with no negative electrode does not include a negative electrode active material. Therefore, the unit area capacity of the negative electrode plate is relatively small, and the CB value of the secondary battery is less than or equal to 0.1.

In some embodiments, the interface resistance of the secondary battery is less than 100 Ω.

In some embodiments, the interface resistance of the secondary battery is optionally 1 Ω, 5 Ω, 10 Ω, 15 Ω, 20 Ω, 25 Ω, 30 Ω, 35 Ω, 40 Ω, 45 Ω, 50 Ω, 55 Ω, 60 Ω, 65 Ω, 70 Ω, 75 Ω, 80 Ω, 85 Ω, 90 Ω, 95 Ω, or 99 Ω.

Herein, the interface resistance of the secondary battery may be tested using a method known in the art. For example, a 1470 multi-channel electrochemical workstation from Solartron in UK is used to measure an alternating-current impedance spectrum of a full battery at 25°C, where a frequency range is 1 Hz to 1 MHz, and a perturbation signal is 5mV. After the relevant electrochemical impedance spectrum is obtained, fitting is performed using Zview software, and a diameter obtained by fitting an arc whose impedance tolerance value is between 1×10⁻⁷ and 1×10⁻⁵ is taken as the interface resistance. For a preparation method of the full battery, reference is made to the preparation method of the embodiments of this application.

The secondary battery with the interface resistance less than 100 Ω helps to improve the interface kinetic performance of the solid electrolyte, and improves the performance of the battery.

In some embodiments, the positive electrode plate, the negative electrode plate, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. The soft pack may be made of plastic. As the plastic, polypropylene, polybutylene terephthalate, polybutylene succinate, and the like may be listed.

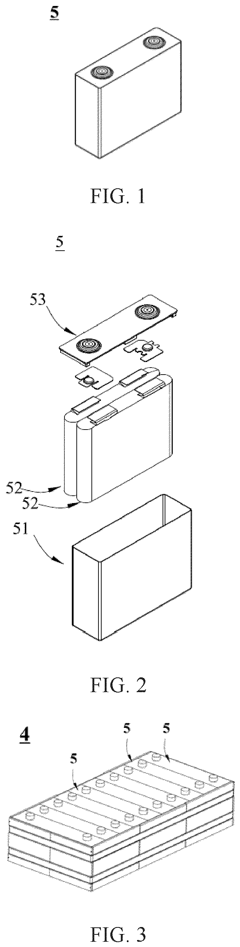

The secondary battery is not limited to any particular shape in this application, and may be cylindrical, rectangular, or of any other shapes. For example, FIG. 1 is a schematic diagram of a secondary battery 5 of a square structure as an example, and FIG. 2 is an exploded view of the secondary battery 5.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. A non-Newtonian fluid electrolyte composition infiltrates the electrode assembly 52. The secondary battery 5 may include one or more electrode assemblies 52, and persons skilled in the art may make choices based on actual needs.

### [Battery module]

In some embodiments, the secondary battery may be assembled into a battery module, and the battery module may include one or more secondary batteries. A specific quantity may be chosen by persons skilled in the art according to use and capacity of the battery module.

FIG. 3 shows a battery module 3 as an example. Referring to FIG. 3, in the battery module 4, a plurality of secondary batteries 5 may be sequentially arranged along a length direction of the battery module 4. Certainly, the secondary batteries may alternatively be arranged in any other manner. Further, the plurality of secondary batteries 5 may be fixed by fasteners.

Optionally, the battery module 4 may further include an enclosure with an accommodating space, and the plurality of secondary batteries 5 are accommodated in the accommodating space.

### [Battery pack]

In some embodiments, the battery module may be further assembled into a battery pack, and the battery pack may include one or more battery modules. A specific quantity may be chosen by persons skilled in the art based on use and capacity of the battery pack.

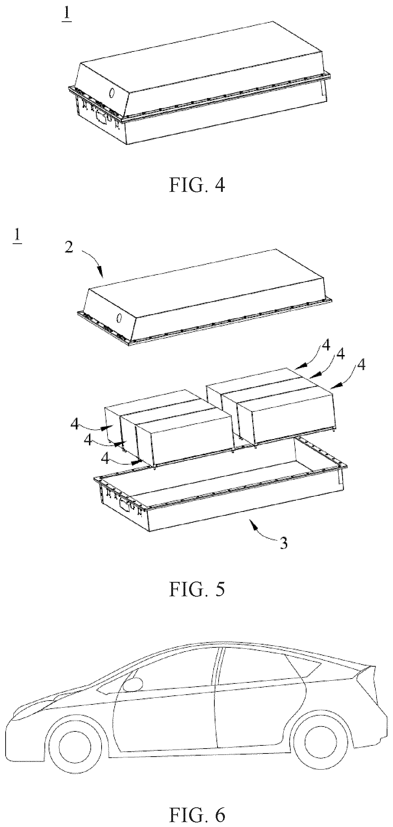

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

### [Electric apparatus]

In an embodiment of this application, an electric apparatus is provided, including at least one of the secondary battery according to any embodiment, the battery module according to any embodiment, or the battery pack according to any embodiment.

The electric apparatus includes at least one of the secondary battery, the battery module, or the battery pack provided in this application. The secondary battery, the battery module, or the battery pack may be used as a power source of the electric apparatus, or as an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

For the electric apparatus, a secondary battery, a battery module, or a battery pack may be selected according to requirements for using the electric apparatus.

FIG. 6 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

In another example, the apparatus may be a mobile phone, a tablet computer, a notebook computer, or the like. The apparatus is usually required to be light and thin and may use a secondary battery as a power supply.

### Examples

The following describes examples of this application. The examples described below are illustrative and merely used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### I. Preparation method

### Example 1

### (1) Solid electrolyte treatment

Surface treatment for the solid electrolyte: Nanosecond laser was used for surface treatment for the solid electrolyte β-Na₂O·11Al₂O₃, where the nanosecond laser treatment was performed in an air atmosphere, with a laser wavelength of 1000 nm, an average laser power of 20 W, a repetition frequency of 30 kHz, a scanning frequency of 100 mm/s, and a pulse duration of 50 ns.

### (2) Preparation of positive electrode plate

First, the β-Na₂O·11Al₂O₃ solid electrolyte powder with a particle size less than 50 µm and a positive electrode active material carbon-coated sodium iron pyrophosphate (Na₄Fe₃(PO₄)₂P₂O₇/C) powder were mixed to uniformity at a mass ratio of 7:13 to obtain a powder mixture; a binder 2.5 wt.% polyvinylidene fluoride (PVDF) was fully dissolved in N-methylpyrrolidone (NMP); then 2.0 wt.% of Super P, 1.0 wt.% of carbon nanotubes, and 94.5 wt.% of the above powder mixture were added and stirred and mixed to uniformity, to obtain a positive electrode slurry. The slurry was uniformly applied onto a surface of a current collector aluminum foil, and then the aluminum foil was transferred to a vacuum drying oven to be dried completely. The dried electrode plate was then calendered and punched to obtain a positive electrode plate.

### (3) Preparation of negative electrode plate

A negative electrode plate with no negative electrode structure: Carbon nanotubes (CNT) and carboxymethyl cellulose (CMC) were added to deionized water at a mass ratio of 1:0.4 and stirred to form a uniform slurry; the slurry was applied onto a surface of a negative electrode current collector copper foil, and then the copper foil was transferred to a vacuum drying oven to be dried completely, to obtain a primer layer; the primer layer was then punched to obtain a negative electrode plate with no negative electrode structure, where an areal density of the primer layer was 10 g/m², and a thickness of the primer layer was 5 µm.

### (4) Preparation of battery

The positive electrode plate, the surface-treated solid electrolyte, and the negative electrode plate were stacked sequentially and then wound to obtain a jelly roll; tabs were welded to the jelly roll; the jelly roll was packaged into an aluminum housing and baked at 80°C to remove moisture; and then the aluminum housing was sealed to obtain an uncharged battery. The uncharged battery was then sequentially subjected to processes such as standing, hot pressing, formation, and capacity testing to obtain the sodium secondary battery product with no negative electrode of Example 1.

### Examples 2 to 27

A preparation method of the battery of Examples 2 to 27 was similar to that of the battery of Example 1, except that the type of the solid electrolyte or the surface treatment method was adjusted, where specific parameters are shown in Table 1, Table 2, and Table 3.

### In example 8,

a preparation method of the polymer solid electrolyte was as follows: in a dry argon atmosphere, sodium bis(fluorosulfonyl)imide (NaFSI) and poly(vinylidene fluoride-copolyhexafluoropropylene) (PVDF-HFP) were mixed at a ratio of 3:2 to obtain a NaFSI/PVDF-HFP polymer solid electrolyte.

### Comparative example 1

A preparation method of the battery of Comparative example 1 was basically the same as that of Example 1, except that the solid electrolyte was not subjected to surface treatment.

### Comparative examples 2 to 9

A preparation method of the battery of Comparative examples 2 to 9 was basically the same as that of Example 1, except that the type of the solid electrolyte was adjusted.

### II. Performance test

### 1. Solid electrolyte

### (1) Acid-base titration test for residual alkali in inorganic solid electrolyte

A chemical reagent potentiometric titration method was used for the test, for example, the test may be performed with reference to the standard GB/T 9725-2007. Specifically, a Metrohm 905 Titrando potentiometric titrator may be used; the solid electrolyte was soaked in ethylene glycol dimethyl ether; an ethylene glycol dimethyl ether solution with the solid electrolyte was titrated with a standard titration solution; a potential or pH value of the ethylene glycol dimethyl ether solution was recorded after 0.1 ml standard titration solution was dropwise added each time; and titration was stopped when there was little change in the potential or pH value. A volume of the standard titration solution that was dropwise added and the measured potential or pH value were recorded, and a titration endpoint was determined using a graphing method or a two-stage derivative method, to determine a titration volume of the standard titration solution. A mass of NaHCO₃, NaOH, and Na₂CO₃ obtained by calculation was divided by a mass of the solid electrolyte, to obtain a mass percentage as an amount of residual alkali in the solid electrolyte.

### (2) X-ray photoelectron spectrometer (XPS) test for molar percentage of sodium element existing in form of residual alkali in inorganic solid electrolyte

A Shimadzu Axis Supra+ photoelectron spectrometer was used to test elements and their percentages within 10 nm of the surface of the inorganic solid electrolyte (oxide & NASICON). XPS full spectrum analysis could be performed first to obtain a molar percentage of the sodium element, and then partial spectrum analysis was performed, to determine a percentage of a molar amount of the sodium element existing in the forms of Na₂CO₃, NaOH, and NaHCO₃ in a molar amount of the sodium element. Ultimately, the molar percentage of the sodium element existing in the forms of Na₂CO₃, NaOH, and NaHCO₃ is multiplied by the molar percentage of the sodium element to obtain a percentage of a molar amount of the sodium element existing in the forms of Na₂CO₃, NaOH, and NaHCO₃ in a molar amount of all the elements detected using XPS.

XPS is a surface characterization method, and therefore it is mainly used for measuring a percentage of surface residual alkali.

### (3) Percentage test for oxygen element existing in hydrogen-oxygen bond, carbon-oxygen double bond, and carbon-oxygen single bond on surface of polymer solid electrolyte

A Shimadzu Axis Supra+ photoelectron spectrometer was used to test elements and their percentages within a thickness of 10 nm of the surface of the polymer solid electrolyte. XPS full spectrum analysis could be performed first to obtain the molar percentage of the oxygen element, and then partial spectrum analysis was performed, to determine a percentage of a molar amount of the oxygen element existing in the forms of a hydrogen-oxygen bond, a carbon-oxygen double bond, and a carbon-oxygen single bond in a molar amount of the oxygen element. Ultimately, the molar percentage of the oxygen element existing in the forms of a hydrogen-oxygen bond, a carbon-oxygen double bond, and a carbon-oxygen single bond in the oxygen element is multiplied by the molar percentage of the oxygen element to obtain a percentage of a molar amount of the oxygen element existing in the forms of a hydrogen-oxygen bond, a carbon-oxygen double bond, and a carbon-oxygen single bond in a molar amount of all the elements detected using XPS.

### (4) Contact angle test

Molten sodium was dropwise added to the surface of the solid electrolyte, then a high-resolution camera (Grasshopper GRAS-50S5M-C) equipped with a Fujinon HF75SA-1 lens was used to take a photograph of the surface of the electrolyte, and a contact angle was measured using ImageJ software. The test processes of the comparative examples and other examples were the same as above.

### 2. Battery performance test

### (1) Interface resistance test

An interface resistance test process was as follows:
An assembled full battery was subjected to an electrochemical alternating-current impedance test. At 25°C, an alternating-current impedance spectrum of the full battery was measured using a 1470 multi-channel electrochemical workstation from Solartron in UK, where a frequency range was 1 Hz to 1 MHz, and a perturbation signal was 5 mV. After the relevant electrochemical impedance spectrum was obtained, fitting was performed using Zview software, and a diameter obtained by fitting an arc whose impedance tolerance value was between 1×10⁻⁷ and 1×10⁻⁵ was taken as the interface resistance. The test processes of the comparative examples and other examples were the same as above.

### (2) Coulombic efficiency test

A coulombic efficiency test process was as follows: At 25°C, the prepared battery was charged to 3.7 V (for a sodium iron pyrophosphate positive electrode) or 4.0 V (for a layered oxide positive electrode) at a constant current of 0.1C to obtain a charge capacity of the first cycle (Cc1), and then discharged to 2.5 V at a constant current of 0.1C to obtain a discharge capacity of the first cycle (Cd1); n cycles of charge and discharge were performed, and the number of cycles when the capacity decayed to 80% was recorded; and average coulombic efficiency of the battery was calculated according to the following formula:
Coulombic efficiency of first cycle=discharge capacity of first cycle (Cd1)/charge capacity of first cycle (Cc1)×100%; and
Coulombic efficiency of n-th cycle=discharge capacity of n-th cycle (Cdn)/charge capacity of n-th cycle (Cen)×100%; where
an average value of the coulombic efficiency from the second cycle to the n-th cycle was taken as the average coulombic efficiency of the battery.

The test processes of the comparative examples and other examples were the same as above.

### (3) Test for the number of cycles to capacity retention rate of 80% at room temperature/low temperature

A test process of the cycling capacity retention rate at room temperature/high temperature was as follows: At 25°C/-10°C and under a normal pressure (0.1 MPa), the prepared full battery was charged to a voltage of 4V (for a layered oxide positive electrode) or 3.7 V (a sodium iron pyrophosphate positive electrode) at a constant current of 1C, and then discharged to a voltage of 2.5 V at a constant current of 1C, and this is one charge and discharge cycle. The initial discharge capacity was defined as 100%. The charge and discharge cycle was repeated until the discharge capacity decayed to 80%, then the test was stopped, and the number of cycles was recorded as the number of cycles when the capacity retention rate reached 80% and as an indicator for evaluating the cycling performance of the full battery. The test processes of the comparative examples and other examples were the same as above.

### (4) Rate performance test

A rate performance test process was as follows:
At 25°C, the prepared battery was placed into a thermostat at 25°C, and left standing for 4 h until the battery reached a constant temperature; the battery that reached the constant temperature was charged to 3.7 V/4 V at a constant current of 1C at 25°C, discharged to 2.5 V at a constant current of 1C, subjected to 5 cycles, and left standing for 5 min; subsequently, the battery was charged to 3.7 V/4 V at a constant current of 2C, subjected to 5 cycles, left standing for 5min, discharged to 2.5 V at a constant current of 2C, and left standing for 5 min, to obtain a discharge capacity C2 at 2C; and afterwards, the charge/discharge current was continuously increased to nC, a corresponding discharge capacity was recorded as Cn, and a value of the charge/discharge current when a rate R (R=C1/Cn×100%) was as high as or below 50% was recorded.

### III. Analysis of test results of examples and comparative examples

The batteries of the examples and comparative examples were prepared according to the foregoing methods, and performance parameters were measured. Results are shown in Table 1, Table 2, and Table 3.

**Table 1**

| No. | Solid electrolyte | | Surface treatment parameters | | | | | Positive electrode plate |
|---|---|---|---|---|---|---|---|---|
| | Inorganic solid electrolyte/polymer solid electrolyte | Mass percentage of sodium salt in polymer solid electrolyte (%) | Nanosecond laser treatment | | | | | Positive electrode active material |
| | | | Average laser power (W) | Laser wavelength (nm) | Repetition frequency (kHz) | Scanning frequency (mm/s) | Pulse duration (ns) | |
| Example 1 | β-Na₂O 11Al₂O₃ | / | 30 | 1064 | 20 | 50 | 50 | Na₄Fe₃(PO₄)₂P₂O₇ |
| Example 2 | β-Na₂O 11Al₂O₃ | / | 30 | 785 | 20 | 50 | 50 | Na₄Fe₃(PO₄)₂P₂O₇ |
| Example 3 | β-Na₂O 11Al₂O₃ | / | 30 | 633 | 20 | 50 | 50 | Na₄Fe₃(PO₄)₂P₂O₇ |
| Example 4 | β-Na₂O 11Al₂O₃ | / | 30 | 1064 | 20 | 50 | 10 | Na₄Fe₃(PO₄)₂P₂O₇ |
| Example 5 | β-Na₂O 11Al₂O₃ | / | 30 | 1064 | 20 | 50 | 100 | Na₄Fe₃(PO₄)₂P₂O₇ |
| Example 6 | Na_{3.4}Zr_{i.9}Zn_{o.1}Si_{2.2}P_{0.8}O₁₂ | / | 20 | 785 | 20 | 50 | 70 | Na₄Fe₃(PO₄)₂P₂O₇ |
| Example 7 | Na₁₁Sn₂PS₁₂ | / | 10 | 785 | 20 | 50 | 70 | Na₄Fe₃(PO₄)₂P₂O₇ |
| Example 8 | NaFSI/PVDF-HFP | 60 | 10 | 633 | 20 | 50 | 80 | Na₄Fe₃(PO₄)₂P₂O₇ |
| Example 9 | NaFSI/PVDF-HFP | 30 | 10 | 633 | 20 | 50 | 80 | Na₄Fe₃(PO₄)₂P₂O₇ |
| Example 10 | NaPF₆/PVDF-HFP | 70 | 10 | 633 | 20 | 50 | 80 | Na₄Fe₃(PO₄)₂P₂O₇ |
| Example 11 | β-Na₂O 11Al₂O₃ | / | 30 | 1064 | 20 | 50 | 50 | Na[Cu_{1/9}Ni_{2/9}Fe_{1/3}Mn_{1/3}]O₂ |
| Example 12 | β-Na₂O 11Al₂O₃ | / | 30 | 1064 | 20 | 50 | 50 | Na_{2/3}Ni_{1/6}Mn_{2/3}Cu_{1/9}Mg_{1/18}O₂ coated with ZrO₂ |

| No. | Solid electrolyte | | | | Battery | | | | | |
|---|---|---|---|---|---|---|---|---|---|---|
| | Percentage of residual alkali (acid-base titration) (ppm) | Molar percentage of residual alkali (tested using XPS) (%) | Molar percentage of O (-C=O, -OH, and -C-O-) on surface (tested using XPS) (%) | Contact angle (molten sodium and solid electrolyte) (°) | Coulombic efficiency at 25°C (%) | | Cycles to 80% of capacity (number) | | Interface resistance (Ω) | Rate performance |
| | | | | | Coulombic efficiency of first cycle | Average coulombic efficiency | 25°C | -10°C | | |
| Example 1 | 390 | 4.2 | / | 62 | 87.5 | 99.8 | 550 | 300 | 72 | 5C |
| Example 2 | 980 | 15.8 | / | 75 | 84.8 | 99.6 | 400 | 250 | 83 | 4C |
| Example 3 | 1130 | 17.2 | / | 81 | 83.5 | 99.4 | 350 | 200 | 89 | 4C |
| Example 4 | 650 | 5.8 | / | 67 | 86.1 | 99.7 | 500 | 300 | 77 | 5C |
| Example 5 | 360 | 3.6 | / | 60 | 84.2 | 99.3 | 400 | 200 | 69 | 6C |
| Example 6 | 250 | 2.7 | / | 68 | 81.4 | 99.6 | 400 | 250 | 78 | 5C |
| Example 7 | 280 | 3.0 | / | 61 | 72.3 | 99.3 | 350 | 200 | 67 | 5C |
| Example 8 | / | / | 3.5 | 49 | 83.7 | 99.5 | 500 | 250 | 33 | 5C |
| Example 9 | / | / | 5.4 | 57 | 75.1 | 99.2 | 300 | 150 | 43 | 5C |
| Example 10 | / | / | 4.3 | 50 | 82.7 | 99.5 | 500 | 100 | 50 | 4C |
| Example 11 | 390 | 4.2 | / | 62 | 80.5 | 99.3 | 200 | 100 | 72 | 4C |
| Example 12 | 390 | 4.2 | / | 62 | 85.3 | 99.6 | 250 | 150 | 72 | 3C |

| | | | | | | | | | | |
|---|---|---|---|---|---|---|---|---|---|---|
| Note: "/" in Table 1 represents that this substance is not included or this performance parameter is not tested. | | | | | | | | | | |

**Table 2**

| No. | Solid electrolyte | | Surface treatment parameters | | | | Positive electrode plate |
|---|---|---|---|---|---|---|---|
| | Inorganic solid electrolyte/polymer solid electrolyte | Mass percentage of sodium salt in polymer solid electrolyte (%) | Magnetron sputtering bias cleaning treatment | | | | Positive electrode active material |
| | | | Atmosphere | Bias power (W) | Bias cleaning time (min) | Substrate sample temperature (°C) | |
| Example 13 | β-Na₂O 11Al₂O₃ | / | Pure oxygen | 80 | 45 | 80 | Na₄Fe₃(PO₄)₂P₂O₇ |
| Example 14 | β-Na₂O 11Al₂O₃ | / | Pure oxygen | 60 | 45 | 80 | Na₄Fe₃(PO₄)₂P₂O₇ |
| Example 15 | β-Na₂O 11Al₂O₃ | / | Pure oxygen | 100 | 45 | 80 | Na₄Fe₃(PO₄)₂P₂O₇ |
| Example 16 | β-Na₂O 11Al₂O₃ | / | Pure oxygen | 80 | 60 | 80 | Na₄Fe₃(PO₄)₂P₂O₇ |
| Example 17 | NaFSI/PVDF-HFP | 60 | Argon | 60 | 30 | 35 | Na₄Fe₃(PO₄)₂P₂O₇ |
| Example 18 | NaFSI/PVDF-HFP | 60 | Vacuum | 60 | 30 | 35 | Na₄Fe₃(PO₄)₂P₂O₇ |
| Example 19 | NaFSI/PVDF-HFP | 60 | Argon | 60 | 30 | 35 | Na[Cu_{1/9}Ni_{2/9}Fe_{1/3}Mn_{1/3}]O₂ |
| Example 20 | NaFSI/PVDF-HFP | 60 | Argon | 60 | 30 | 35 | Na_{2/3}Ni_{1/6}Mn_{2/3}Cu_{1/9}Mg_{1/18}O₂ coated with ZrO₂ |

| No. | Solid electrolyte | | | | Battery | | | | | |
|---|---|---|---|---|---|---|---|---|---|---|
| | Percentage of residual alkali (acid-base titration) (ppm) | Molar percentage of residual alkali (tested using XPS) (%) | Molar percentage of O (-C=O, -OH, and -C-O-) on surface (tested using XPS) (%) | Contact angle (Molten sodium and solid electrolyte) (°) | Coulombic efficiency at 25°C (%) | | Cycles to 80% of capacity (number) | | Interface resistance (Ω) | Rate performance |
| | | | | | Coulombic efficiency of first cycle | Average coulombic efficiency | 25°C | -10°C | | |
| Example 13 | 540 | 6.9 | / | 73 | 86.8 | 99.6 | 400 | 250 | 80 | 4C |
| Example 14 | 1000 | 16.1 | / | 78 | 84.0 | 99.4 | 350 | 200 | 86 | 4C |
| Example 15 | 460 | 5.2 | / | 69 | 86.2 | 99.4 | 350 | 250 | 75 | 5C |
| Example 16 | 520 | 6.3 | / | 70 | 85.3 | 99.5 | 350 | 200 | 77 | 5C |
| Example 17 | / | / | 6.2 | 58 | 80.2 | 99.4 | 450 | 200 | 54 | 4C |
| Example 18 | / | / | 14.2 | 76 | 69.3 | 99.0 | 250 | 100 | 70 | 3C |
| Example 19 | / | / | 6.2 | 58 | 71.3 | 99.1 | 150 | 100 | 54 | 4C |
| Example 20 | / | / | 6.2 | 58 | 77.2 | 99.4 | 200 | 100 | 54 | 3C |

| | | | | | | | | | | |
|---|---|---|---|---|---|---|---|---|---|---|
| Note: "/" in Table 2 represents that this substance is not included or this performance parameter is not tested. | | | | | | | | | | |

**Table 3**

| No. | Solid electrolyte | | Surface treatment parameters | | | | Positive electrode plate |
|---|---|---|---|---|---|---|---|
| | Inorganic solid electrolyte/polymer solid electrolyte | Mass percentage of sodium salt in polymer solid electrolyte (%) | Plasma cleaning treatment | | | | Positive electrode active material |
| | | | Atmosphere | Cleaning power (W) | Cleaning frequency (MHz) | Cleaning time (min) | |
| Example 21 | NaFSI/PVDF-HFP | 60 | Nitrogen | 600 | 13.56 | 8 | Na₄Fe₃(PO₄)₂P₂O₇ |
| Example 22 | NaFSI/PVDF-HFP | 60 | Helium | 600 | 13.56 | 8 | Na₄Fe₃(PO₄)₂P₂O₇ |
| Example 23 | NaFSI/PVDF-HFP | 60 | Helium | 100 | 13.56 | 8 | Na₄Fe₃(PO₄)₂P₂O₇ |
| Example 24 | NaFSI/PVDF-HFP | 60 | Helium | 1250 | 13.56 | 8 | Na₄Fe₃(PO₄)₂P₂O₇ |
| Example 25 | NaFSI/PVDF-HFP | 60 | Helium | 600 | 13.56 | 10 | Na₄Fe₃(PO₄)₂P₂O₇ |
| Example 26 | NaPF₆/PEO | 60 | Helium | 1000 | 13.56 | 5 | Na₄Fe₃(PO₄)₂P₂O₇ |
| Example 27 | β-Na₂O 11Al₂O₃ | / | Helium | 1250 | 13.56 | 5 | Na₄Fe₃(PO₄)₂P₂O₇ |
| Comparative example 1 | β-Na₂O 11Al₂O₃ | / | / | / | / | / | Na₄Fe₃(PO₄)₂P₂O₇ |
| Comparative example 2 | Na_{3.4}Zr_{1.9}Zn_{0.1}Si_{2.2}P_{0.8}O₁₂ | / | / | / | / | / | Na₄Fe₃(PO₄)₂P₂O₇ |
| Comparative example 3 | Na₁₁Sn₂PS₁₂ | / | / | / | / | / | Na₄Fe₃(PO₄)₂P₂O₇ |
| Comparative example 4 | NaFSI/PVDF-HFP | 60 | / | / | / | / | Na₄Fe₃(PO₄)₂P₂O₇ |
| Comparative example 5 | NaFSI/PVDF-HFP | 30 | / | / | / | / | Na₄Fe₃(PO₄)₂P₂O₇ |
| Comparative example 6 | β-Na₂O 11Al₂O₃ | / | / | / | / | / | Na[Cu_{1/9}Ni_{2/9}Fe_{1/3}Mn_{1/3}]O₂ |
| Comparative example 7 | β-Na₂O 11Al₂O₃ | / | / | / | / | / | Na_{2/3}Ni_{1/6}Mn_{2/3}Cu_{1/9}Mg_{1/18}O₂ coated with ZrO₂ or TiO₂ |
| Comparative example 8 | NaFSI/PVDF-HFP | 60 | / | / | / | / | Na[Cu_{1/9}Ni_{2/9}Fe_{1/3}Mn_{1/3}]O₂ |
| Comparative example 9 | NaFSI/PVDF-HFP | 60 | / | / | / | / | Na_{2/3}Ni_{1/6}Mn_{2/3}Cu_{1/9}Mg_{1/18}O₂ coated with ZrO₂ or TiO₂ |

| No. | Solid electrolyte | | | | Battery | | | | | |
|---|---|---|---|---|---|---|---|---|---|---|
| | Percentage of residual alkali (acid-base titration) (ppm) | Molar percentage of residual alkali (tested using XPS) (%) | Molar percentage of O (-C=O, -OH, and -CO-) on surface (tested using XPS) (%) | Contact angle (Molten sodium and solid electrolyte) (°) | Coulombic efficiency at 25°C (%) | | Cycles to 80% of capacity (number) | | Interface resistance (Ω) | Rate performance |
| | | | | | Coulombic efficiency of first cycle | Average coulombic efficiency | 25°C | -10°C | | |
| Example 21 | / | / | 3.0 | 41 | 84.3 | 99.6 | 450 | 200 | 28 | 6C |
| Example 22 | / | / | 1.9 | 36 | 88.6 | 99.8 | 550 | 250 | 21 | 6C |
| Example 23 | / | / | 11.9 | 79 | 79.2 | 99.3 | 300 | 150 | 163 | 3C |
| Example 24 | / | / | 1.6 | 33 | 89.1 | 99.6 | 450 | 250 | 18 | 6C |
| Example 25 | / | / | 1.8 | 34 | 88.5 | 99.6 | 500 | 200 | 20 | 6C |
| Example 26 | / | / | 7.9 | 52 | 80.9 | 99.3 | 400 | 150 | 42 | 4C |
| Example 27 | 420 | 5.6 | / | 58 | 86.6 | 99.7 | 500 | 250 | 76 | 5C |
| Comparative example 1 | 5380 | 35.4 | / | 101 | 82.2 | 99.3 | 200 | 100 | 923 | 2C |
| Comparative example 2 | 1350 | 11.6 | / | 92 | 78.5 | 99.1 | 150 | 100 | 764 | 2C |
| Comparative example 3 | 1740 | 13.8 | / | 98 | 65.8 | 98.6 | 100 | 50 | 869 | 2C |
| Comparative example 4 | / | / | 21.3 | 88 | 77.4 | 99.2 | 200 | 100 | 467 | 3C |
| Comparative example 5 | / | / | 24.5 | 83 | 69.3 | 98.8 | 100 | 50 | 345 | 3C |
| Comparative example 6 | 5380 | 35.4 | / | 101 | 62.6 | 98.2 | 50 | 0 | 923 | 2C |
| Comparative example 7 | 5380 | 35.4 | / | 101 | 68.9 | 98.5 | 100 | 0 | 923 | 2C |
| Comparative example 8 | / | / | 21.3 | 88 | 58.9 | 98.2 | 50 | 0 | 467 | 3C |
| Comparative example 9 | / | / | 21.3 | 88 | 63.1 | 98.6 | 100 | 50 | 467 | 2C |

| | | | | | | | | | | |
|---|---|---|---|---|---|---|---|---|---|---|
| Note: "/" in Table 3 represents that this substance is not included or this performance parameter is not tested. | | | | | | | | | | |

From the above results, it can be seen that Examples 1 to 27 include a solid electrolyte, where the contact angle of molten sodium on the surface of the solid electrolyte is less than 82°. From the comparison between Examples 1 to 27 and Comparative examples 1 to 9, it can be seen that as compared with a conventional solid electrolyte, the contact angle of the molten sodium on the surface of the solid electrolyte in this application is less than 82°, which helps to reduce the interface resistance of the battery and improve the interface kinetic performance between the solid electrolyte and the positive electrode plate/negative electrode plate.

From the comparison between examples 1 to 5, 13 to 16 and 27 and Comparative example 1, the comparison between Example 6 and Comparative example 2, the comparison between Example 7 and Comparative example 3, the comparison between Examples 8, 10, 17, 18 and 21 to 26 and Comparative example 4, the comparison between Example 9 and Comparative example 5, the comparison between Example 11 and Comparative example 6, the comparison between Example 12 and Comparative example 7, the comparison between Example 19 and Comparative example 8, and the comparison between Example 20 and Comparative example 9, it can be seen that for the inorganic solid electrolyte and the polymer solid electrolyte, controlling the contact angle of the molten sodium on the surface of the solid electrolyte to be less than 82° helps to reduce the interface resistance of the battery and increase the number of cycles of the battery when the capacity retention rate reaches 80% at 25°C.

From the comparison between Examples 1 to 5, 13 to 16 and 27 and Comparative example 1, the comparison between Example 6 and Comparative example 2, the comparison between Example 7 and Comparative example 3, the comparison between Example 11 and Comparative example 6, and the comparison between Example 12 and Comparative example 7, it can be seen that for the β-Na₂O·11Al₂O₃, Na_{3.4}Zr_{1.9}Zn_{0.1}Si_{2.2}P_{0.8}O₁₂, or Na₁₁Sn₂PS₁₂ inorganic solid electrolyte, using nanosecond laser treatment, magnetron sputtering bias cleaning treatment, or plasma cleaning treatment to treat the solid electrolyte helps to reduce the interface resistance of the battery and improve the coulombic efficiency of the first cycle, the number of cycles when the capacity retention rate reaches 80% at 25°C/-10°C, and the rate performance of the battery.

From the comparison between Examples 8, 10, 17, 18 and 21 to 26 and Comparative example 4, the comparison between Example 9 and Comparative example 5, the comparison between Example 19 and Comparative example 8, and the comparison between Example 20 and Comparative example 9, it can be seen that for the NaFSI/PVDF-HFP, NaPF₆/PVDF-HFP, or NaPF₆/PEO polymer solid electrolyte, using nanosecond laser treatment, magnetron sputtering bias cleaning treatment, or plasma cleaning treatment to treat the surface of the solid electrolyte helps to reduce the interface resistance of the battery and increase the number of cycles of the battery when the capacity retention rate reaches 80% at 25°C.

From the comparison between Examples 1, 2, 4, 5, 13 to 16 and 27 and Comparative example 1, the comparison between Example 6 and Comparative example 2, the comparison between Example 7 and Comparative example 3, the comparison between Example 11 and Comparative example 6, and the comparison between Example 12 and Comparative example 7, it can be seen that for the β-Na₂O·11Al₂O₃, Na_{3.4}Zr_{1.9}Zn_{0.1}Si_{2.2}P_{0.8}O₁₂, or Na₁₁Sn₂PS₁₂ inorganic solid electrolyte, controlling the percentage of the residual alkali on the surface of the inorganic solid electrolyte to be not greater than 1000 ppm helps to reduce the interface resistance of the battery and improve the coulombic efficiency of the first cycle, the number of cycles when the capacity retention rate reaches 80% at 25°C/-10°C, and the rate performance of the battery.

From the comparison between Examples 1, 5, 15, 16 and 27 and Examples 2, 4, 13 and 14, it can be seen that controlling the percentage of the residual alkali on the surface of the inorganic solid electrolyte to be not greater than 500 ppm helps to further reduce the interface resistance of the battery and improve the rate performance of the battery.

From the comparison between Examples 1, 4, 5, 13, 15, 16 and 27 and Comparative example 1, the comparison between Example 6 and Comparative example 2, the comparison between Example 7 and Comparative example 3, the comparison between Example 11 and Comparative example 6, and the comparison between Example 12 and Comparative example 7, it can be seen that for the β-Na₂O·11Al₂O₃, Na_{3.4}Zr_{1.9}Zn_{0.1}Si_{2.2}P_{0.8}O₁₂, or Na₁₁Sn₂PS₁₂ inorganic solid electrolyte, using XPS to test the inorganic solid electrolyte and controlling the molar percentage of the sodium element existing in the form of residual alkali to be not greater than 10% based on the measured molar amount of the sodium element helps to reduce the interface resistance of the battery and improve the coulombic efficiency of the first cycle, the number of cycles when the capacity retention rate reaches 80% at 25°C/-10°C, and the rate performance of the battery.

From the comparison between Examples 8, 10, 17, 21, 22 and 24 to 26 and Comparative example 4, the comparison between Example 9 and Comparative example 5, the comparison between Example 19 and Comparative example 8, and the comparison between Example 20 and Comparative example 9, it can be seen that for the NaFSI/PVDF-HFP, NaPF₆/PVDF-HFP, or NaPF₆/PEO polymer solid electrolyte, using XPS to test the polymer solid electrolyte and controlling the molar percentage of the oxygen element existing in the forms of a hydrogen-oxygen bond, a carbon-oxygen double bond, and a carbon-oxygen single bond to be not greater than 10% based on the molar amount of all the elements detected helps to reduce the interface resistance of the battery and improve the coulombic efficiency of the first cycle/the average coulombic efficiency, the number of cycles when the capacity retention rate reaches 80% at 25°C/-10°C, and the rate performance of the battery.

From the comparison between examples 1 to 5 and Comparative example 1, the comparison between Example 6 and Comparative example 2, the comparison between Example 7 and Comparative example 3, the comparison between Examples 8 and10 and Comparative example 4, the comparison between Example 9 and Comparative example 5, the comparison between Example 11 and Comparative example 6, and the comparison between Example 12 and Comparative example 7, it can be seen that using nanosecond laser to treat the surface of the solid electrolyte so as to make the contact angle of the molten sodium on the surface of the solid electrolyte to be less than 82° helps to reduce the interface resistance of the battery and increase the number of cycles when the capacity retention rate reaches 80% at 25°C and the rate performance of the battery.

From the comparison between examples 13 to 16 and Comparative example 1, the comparison between Example 17 and 18 and Comparative example 4, the comparison between Example 19 and Comparative example 8, and the comparison between Example 20 and Comparative example 9, it can be seen that using magnetron sputtering bias cleaning to treat the surface of the solid electrolyte so as to make the contact angle of the molten sodium on the surface of the solid electrolyte to be less than 82° helps to reduce the interface resistance of the battery and increase the number of cycles of the battery when the capacity retention rate reaches 80% at 25°C.

From the comparison between example 27 and Comparative example 1 and the comparison between Examples 21 to 26 and Comparative example 4, it can be seen that using plasma cleaning to treat the surface of the solid electrolyte so as to make the contact angle of the molten sodium on the surface of the solid electrolyte to be less than 82° helps to reduce the interface resistance of the battery, improve the coulombic efficiency of the first cycle/the average coulombic efficiency of the battery, and increase the number of cycles of the battery when the capacity retention rate reaches 80% at 25°C/-10°C.

From the comparison between Example 1 and Examples 6 and 7, it can be seen that after the surface of the inorganic solid electrolyte is treated using nanosecond laser, as compared with the Na_{3.4}Zr_{1.9}Zn_{0.1}Si_{2.2}P_{0.8}O₁₂ or Na₁₁Sn₂PS₁₂ inorganic solid electrolyte, the percentage of the residual alkali before and after surface treatment of the β-Na₂O·11Al₂O₃ inorganic solid electrolyte is reduced more significantly, which helps to significantly improve the coulombic efficiency of the first cycle/the average coulombic efficiency of the battery and increase the number of cycles of the battery when the capacity retention rate reaches 80% at 25°C/-10°C.

From the comparison between Example 6 and Examples 1 and 7, it can be seen that after the surface of the inorganic solid electrolyte is treated using nanosecond laser, as compared with the β-Na₂O·11Al₂O₃ or Na₁₁Sn₂PS₁₂ inorganic solid electrolyte, the percentage of the residual alkali on the surface of the Na_{3.4}Zr_{1.9}Zn_{0.1}Si_{2.2}P_{0.8}O₁₂ inorganic solid electrolyte is smaller, which helps to further reduce the interface resistance of the battery.

From the comparison between Example 8 and Example 9, it can be seen that after the surface of the polymer solid electrolyte is treated using nanosecond laser, as compared with the polymer solid electrolyte in which the mass percentage of the sodium salt is 30%, the molar percentage of the oxygen element existing in the forms of O-H, C=O, and C-O in the polymer solid electrolyte in which the mass percentage of the sodium salt is 60% is larger, which helps to further reduce the interface resistance of the battery and improve the coulombic efficiency of the first cycle/the average coulombic efficiency of the battery, the number of cycles when the capacity retention rate reaches 80% at 25°C/-10°C, and the rate performance of the battery.

From the comparison between Example 17 and Example 18, it can be seen that for the NaFSI/PVDF-HFP polymer solid electrolyte, using magnetron sputtering bias cleaning to treat the surface of the solid electrolyte and controlling the magnetron sputtering bias cleaning treatment to be performed in an argon atmosphere help to further reduce the interface resistance of the battery, improve the coulombic efficiency of the first cycle/the average coulombic efficiency of the battery, the number of cycles when the capacity retention rate reaches 80% at 25°C/-10°C, and the rate performance of the battery.

From the comparison between Example 22 and Example 21, it can be seen that for the NaFSI/PVDF-HFP polymer solid electrolyte, using plasma cleaning to treat the surface of the solid electrolyte and controlling the plasma cleaning treatment to be performed in a helium atmosphere help to further reduce the interface resistance of the battery, improve the coulombic efficiency of the first cycle/the average coulombic efficiency of the battery and increase the number of cycles of the battery when the capacity retention rate reaches 80% at 25°C/-10°C.

From the comparison between Examples 1 and 27 and Example 13, it can be seen that for the β-Na₂O·11Al₂O₃ inorganic solid electrolyte, compared with using magnetron sputtering bias cleaning to treat the surface of the inorganic solid electrolyte, using nanosecond laser or plasma cleaning to treat the inorganic solid electrolyte helps to reduce the interface resistance of the battery and improve the average coulombic efficiency of the battery, the number of cycles when the capacity retention rate reaches 80% at 25°C/-10°C and the rate performance of the battery. From the comparison between Example 1 and Example 27, it can be seen that for the β-Na₂O·11Al₂O₃ inorganic solid electrolyte, compared with using plasma cleaning to treat the surface of the inorganic solid electrolyte, using nanosecond laser to treat the inorganic solid electrolyte helps to reduce the interface resistance of the battery, improve the coulombic efficiency of the first cycle/the average coulombic efficiency of the battery and increase the number of cycles of the battery when the capacity retention rate reaches 80% at 25°C/-10°C.

From the comparison between Examples 8 and 22 and Example 17, it can be seen that for the NaFSI/PVDF-HFP polymer solid electrolyte, compared with using magnetron sputtering bias cleaning to treat the surface of the polymer solid electrolyte, using nanosecond laser or plasma cleaning to treat the polymer solid electrolyte helps to reduce the interface resistance of the battery and improve the coulombic efficiency of the first cycle/the average coulombic efficiency of the battery, the number of cycles when the capacity retention rate reaches 80% at 25°C/-10°C and the rate performance of the battery. From the comparison between Example 22 and Example 8, it can be seen that for the NaFSI/PVDF-HFP polymer solid electrolyte, compared with using nanosecond laser to treat the surface of the polymer solid electrolyte, using plasma cleaning to treat the polymer solid electrolyte helps to reduce the interface resistance of the battery and improve the coulombic efficiency of the first cycle/the average coulombic efficiency of the battery, the number of cycles when the capacity retention rate reaches 80% at 25°C and the rate performance of the battery.

From the comparison between Example 1 and Examples 11 and 12, it can be seen that for the inorganic solid electrolyte, after the surface of the solid electrolyte is treated using nanosecond laser, compared with using Na(Cu_{1/9}Ni_{2/9}Fe_{1/3}Mn_{1/3})O₂ or Na_{2/3}Ni_{1/6}Mn_{2/3}Cu_{1/9}Mg_{1/18}O₂ coated with ZrO₂ or TiO₂ as the positive electrode active material, using Na₄Fe₃(PO₄)₂P₂O₇ as the positive electrode active material helps to reduce the interface resistance of the battery and improve the coulombic efficiency of the first cycle/the average coulombic efficiency of the battery, the number of cycles when the capacity retention rate reaches 80% at 25°C/-10°C and the rate performance of the battery.

From the comparison between Example 12 and Example 11, it can be seen that for the inorganic solid electrolyte, after the surface of the solid electrolyte is treated using nanosecond laser, compared with using Na(Cu_{1/9}Ni_{2/9}Fe_{1/3}Mn_{1/3})O₂ as the positive electrode active material, using Na_{2/3}Ni_{1/6}Mn_{2/3}Cu_{1/9}Mg_{1/18}O₂ coated with ZrO₂ or TiO₂ as the positive electrode active material helps to improve the coulombic efficiency of the first cycle/the average coulombic efficiency of the battery and increase the number of cycles of the battery when the capacity retention rate reaches 80% at 25°C/-10°C.

From the comparison between Example 17 and Examples 19 and 20, it can be seen that for the polymer solid electrolyte, after the surface of the solid electrolyte is treated using magnetron sputtering bias cleaning, compared with using Na(Cu_{1/9}Ni_{2/9}Fe_{1/3}Mn_{1/3})O₂ or Na_{2/3}Ni_{1/6}Mn_{2/3}Cu_{1/9}Mg_{1/18}O₂ coated with ZrO₂ or TiO₂ as the positive electrode active material, using Na₄Fe₃(PO₄)₂P₂O₇ as the positive electrode active material helps to improve the coulombic efficiency of the first cycle/the average coulombic efficiency of the battery and increase the number of cycles of the battery when the capacity retention rate of the battery reaches 80% at 25°C/-10°C.

From the comparison between Example 20 and Example 19, it can be seen that for the polymer solid electrolyte, after the surface of the solid electrolyte is treated using magnetron sputtering bias cleaning, compared with using Na(Cu_{1/9}Ni_{2/9}Fe_{1/3}Mn_{1/3})O₂ as the positive electrode active material, using Na_{2/3}Ni_{1/6}Mn_{2/3}Cu_{1/9}Mg_{1/18}O₂ coated with ZrO₂ or TiO₂ as the positive electrode active material helps to improve the coulombic efficiency of the first cycle/the average coulombic efficiency of the battery and increase the number of cycles of the battery when the capacity retention rate of the battery reaches 80% at 25°C.

It can be seen from the examples that excessively large laser power, excessively long pulse duration, or excessively long cleaning time can further reduce the percentage of the residual alkali or the percentage of the oxygen-containing functional group and help to improve the interface performance, but excessive energy causes damage to the bulk material of the solid electrolyte, thus reducing the cycling performance of the battery to some extent.

It should be noted that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A solid electrolyte for a sodium secondary battery, **characterized in that** a contact angle of molten sodium on a surface of the solid electrolyte is less than 82°.

2. The solid electrolyte according to claim 1, **characterized in that** the solid electrolyte comprises an inorganic solid electrolyte or a polymer solid electrolyte.

3. The solid electrolyte according to claim 2, **characterized in that** based on a total mass of the inorganic solid electrolyte, a mass percentage of residual alkali in the inorganic solid electrolyte is not greater than 1000 ppm, optionally not greater than 500 ppm.

4. The solid electrolyte according to claim 2 or 3, **characterized in that** the inorganic solid electrolyte is tested using X-ray photoelectron spectroscopy (XPS) analysis, wherein a molar percentage of the sodium element existing in a form of residual alkali is not greater than 10% based on a molar amount of all elements detected.

5. The solid electrolyte according to any one of claims 2 to 4, **characterized in that** the inorganic solid electrolyte comprises one or more of a sulfur-based electrolyte, a sodium superionic conductor, and an oxide electrolyte.

6. The solid electrolyte according to claim 5, **characterized in that** the sulfur-based electrolyte comprises one or more of glassy Na₂S-P₂S₅, Na₁₁Sn₂PnX₁₂, and Na₃Pn_{y}Pn'_{1-y}X_{z}X'_{4-z}, wherein Pn comprises at least one of P and Sb, X comprises at least one of S and Se, Pn' comprises at least one of Si, Sn, and Ge, X' comprises at least one of F, Br, and Cl, 0<y≤1, and 0<z≤4,
the sodium superionic conductor comprises Na₃₊ₓM_{y}M'_{2-y}Si_{2-z}P_{z}O₁₂, wherein M and M' each independently comprise at least one of Zr, Ca, Mg, Zn, La, Ti, and Nb, 0≤x≤1, 0<y≤2, and 0≤z<2, and
the oxide electrolyte comprises at least one of Na-β-Al₂O₃ and Na-β"-Al₂O₃, wherein Na-β-Al₂O₃ comprises β-Na₂O·11Al₂O₃, and Na-β"-Al₂O₃ comprises β"-Na₂O·5Al₂O₃; and optionally, the oxide electrolyte further comprises an inorganic oxide, wherein the inorganic oxide comprises one or more of Li₂O, MgO, TiO₂, ZrO₂, Y₂O₃, MnO₂, SiO₂, and Fe₂O₃, and a mass percentage of the inorganic oxide is 0.5% to 30% based on a total mass of the oxide electrolyte.

7. The solid electrolyte according to claim 2, **characterized in that** the polymer solid electrolyte is tested using X-ray photoelectron spectroscopy (XPS) analysis, wherein a molar percentage of the oxygen element existing in forms of a hydrogen-oxygen bond, a carbon-oxygen double bond, and a carbon-oxygen single bond is not greater than 10% based on a molar amount of all elements detected.

8. The solid electrolyte according to any one of claims 2 to 7, **characterized in that** the polymer solid electrolyte comprises a sodium salt and a polymer, optionally comprising a plasticizer and/or inorganic fillers.

9. The solid electrolyte according to claim 8, **characterized in that** the sodium salt comprises one or more of sodium chloride, sodium bromide, sodium nitrate, sodium perchlorate, sodium hexafluorophosphate, sodium tetrafluoroborate, sodium tetrafluoroyttrate, sodium hexafluoroarsenate, sodium acetate, sodium trifluoroacetate, sodium tetraphenylborate, sodium trifluoromethanesulfonate, sodium bis(fluorosulfonyl)imide, sodium bis(trifluoromethanesulfonyl)imide, and sodium (n-perfluorobutylsulfonyl)imide, optionally comprising one or more of sodium hexafluorophosphate and sodium bis(fluorosulfonyl)imide

10. The solid electrolyte according to claim 8 or 9, **characterized in that** the polymer comprises one or more of polyethylene oxide, polyethylene glycol, polyvinylpyrrolidone, polymethyl methacrylate, polyvinylidene fluoride, poly(vinylidene fluoride-copolyhexafluoropropylene), polyvinyl alcohol, polyacrylonitrile, polyvinyl chloride, polyacrylamide, polytrimethylene carbonate, and perfluoropolyether.

11. The solid electrolyte according to any one of claims 8 to 10, **characterized in that** the polymer solid electrolyte comprises a polymer-in-salt electrolyte, wherein a mass percentage of the sodium salt in the polymer-in-salt electrolyte is greater than 50% and less than 100% based on a total mass of the polymer-in-salt electrolyte.

12. The solid electrolyte according to any one of claims 8 to 11, **characterized in that** the polymer solid electrolyte comprises a salt-in-polymer electrolyte, wherein a mass percentage of the sodium salt in the salt-in-polymer electrolyte is 5% to 50% based on a total mass of the salt-in-polymer electrolyte.

13. The solid electrolyte according to any one of claims 1 to 12, **characterized in that** the solid electrolyte is an electrolyte subjected to a surface treatment, wherein a method for the surface treatment comprises one or more of nanosecond laser treatment, magnetron sputtering bias cleaning treatment, and plasma cleaning treatment.

14. The solid electrolyte according to claim 13, **characterized in that** an atmosphere for the nanosecond laser treatment comprises an air atmosphere, wherein a laser wavelength is 250 nm to 3000 nm, optionally 250 nm to 1200 nm; an average laser power is 5 W to 30 W, optionally 10 W to 30 W; a repetition frequency is 5 kHz to 40 kHz; a scanning frequency is 20 mm/s to 150 mm/s; and a pulse duration is 10 ns to 100 ns, optionally 50 ns to 100 ns.

15. The solid electrolyte according to claim 13 or 14, **characterized in that** an atmosphere for the magnetron sputtering bias cleaning treatment comprises a vacuum atmosphere, an argon atmosphere, or an oxygen atmosphere, wherein a pressure of the vacuum atmosphere is 10⁻⁴ Pa to 1 Pa; a pressure of the argon or oxygen atmosphere is 0.4 Pa to 0.8 Pa; a bias power is 60 W to 100 W; a bias cleaning time is 5 min to 60 min; and a temperature is 20°C to 150°C.

16. The solid electrolyte according to any one of claims 13 to 15, **characterized in that** an atmosphere for the plasma cleaning treatment comprises an air atmosphere, a vacuum atmosphere, an argon atmosphere, a nitrogen atmosphere, or a helium atmosphere, wherein a pressure of the vacuum atmosphere is 10⁻⁴ Pa to 1 Pa; a pressure of the argon atmosphere is 0.2 Pa to 1 Pa; a pressure of the nitrogen atmosphere is 0.2 Pa to 1 Pa; a pressure of the helium atmosphere pressure is 0.2 Pa to 1 Pa; a cleaning power of the plasma cleaning treatment is 100 W to 3000 W; a cleaning frequency is 10⁻³ MHz to 3000 MHz; and a cleaning time is 0.1 min to 10 min.

17. The solid electrolyte according to any one of claims 13 to 16, **characterized in that** the solid electrolyte is an oxide electrolyte and the method for the surface treatment is nanosecond laser treatment.

18. A secondary battery, **characterized by** comprising the solid electrolyte according to any one of claims 1 to 17.

19. The secondary battery according to claim 18, **characterized in that** the secondary battery is a sodium secondary battery.

20. The secondary battery according to claim 18 or 19, **characterized in that** the secondary battery is a sodium secondary battery with no negative electrode.

21. The secondary battery according to any one of claims 18 to 20, **characterized in that** the secondary battery comprises a positive electrode plate, wherein the positive electrode plate comprises a positive electrode active material; and the positive electrode active material comprises at least one of a layered oxide, a polyanionic compound, and a Prussian blue compound.

22. The secondary battery according to claim 21, **characterized in that** the positive electrode active material comprises one or more of a layered transition metal oxide, a polyanionic compound, and a Prussian blue compound, and optionally comprises one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, NaMnFe(CN)₆.

23. The secondary battery according to claim 22, **characterized in that** a coating layer is provided on a surface of the positive electrode active material, wherein the coating layer comprises one or more of a carbon material, ZrO₂, TiO₂, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, and aluminum fluoride, and the carbon material comprises one or more of amorphous carbon, graphite, and graphene.

24. The secondary battery according to claim 23, **characterized in that** a thickness of the coating layer is 2 nm to 1000 nm, optionally 10 nm to 100 nm.

25. The secondary battery according to any one of claims 18 to 24, **characterized in that** the secondary battery comprises a negative electrode plate, wherein the negative electrode plate comprises a negative electrode current collector and a primer layer disposed on at least one surface of the negative electrode current collector, and the primer layer comprises one or more of carbon nanotubes, graphite, graphene, silver and carbon composite nanoparticles, and tin and carbon composite nanoparticles.

26. The secondary battery according to claim 25, **characterized in that** an areal density of the primer layer is 5 g/m² to 50 g/m².

27. The secondary battery according to claim 26, **characterized in that** a thickness of the primer layer is 2 µm to 100 µm.

28. The secondary battery according to any one of claims 18 to 27, **characterized in that** an interface resistance of the secondary battery is less than 100 Ω.

29. A battery module, **characterized by** comprising the secondary battery according to any one of claims 18 to 28.

30. A battery pack, **characterized by** comprising the secondary battery according to any one of claims 18 to 28 or the battery module according to claim 29.

31. An electric apparatus, **characterized by** comprising at least one of the secondary battery according to any one of claims 18 to 28, the battery module according to claim 29, and the battery pack according to claim 30.
